# EUROPÄISCHE PATENTSCHRIFT

(11) **EP 4 340 110 B1**
(45) Veröffentlichungstag und Bekanntmachung des Hinweises auf die Patenterteilung: **14.01.2026**
(21) Anmeldenummer: 23196354.7
(22) Anmeldetag: 08.09.2023
(51) Int. Cl.: H01M 50/209, H01M 50/264, H01M 50/291

(54) **SYSTEM BESTEHEND AUS EINER STAPELHILFE UND EINER MEHRZAHL VON AGM-BATTERIEN**
SYSTEM CONSISTING OF A STACKING AID AND A PLURALITY OF AGM BATTERIES
SYSTÈME COMPRENANT UN AUXILIAIRE D'EMPILAGE ET UNE PLURALITÉ DE BATTERIES AGM

(30) Priorität: 14.09.2022 DE 102022123511
(43) Veröffentlichungstag der Anmeldung: 20.03.2024
(73) Patentinhaber: HOPPECKE Batterien GmbH & Co. KG., 59929 Brilon (DE)
(72) Erfinder: Bieker, Mischel, 34431 Marsberg (DE)
(74) Vertreter: Brinkmann & Partner

(56) Entgegenhaltungen:
- EP-A1- 4 156 368
- US-A1- 2002 192 543
- US-A1- 2022 255 173

## Beschreibung

Die Erfindung betrifft ein System bestehend aus einer Stapelhilfe und einer Mehrzahl von in der Stapelhilfe angeordneten AGM-Batterien mit den Merkmalen des Oberbegriffs nach Anspruch 1. Ferner betrifft die Erfindung eine Stapelhilfe zur Aufnahme von AGM-Batterien mit den Merkmalen des Oberbegriffs nach Anspruch 2.

AGM-Batterien im Allgemeinen sowie Systeme bestehend aus einer Stapelhilfe einerseits und einer Mehrzahl von AGM-Batterien andererseits im Speziellen sind aus dem Stand der Technik an sich bekannt, weshalb es eines gesonderten druckschriftlichen Nachweises an dieser Stelle nicht bedarf. Es sei deshalb auch nur beispielhaft auf die DE 20 2019 105 570 U1 verwiesen, die einen Batterieschrank zur Aufnahme insbesondere von AGM-Batterien offenbart.

Bei AGM-Batterien handelt es sich um wiederaufladbare Batterien, die über in einem Gehäuse angeordnete Elektrodenplatten verfügen. Das Gehäuse ist im Querschnitt rechteckförmig ausgebildet und verfügt über parallel zueinander verlaufende erste Seitenwände einerseits sowie über parallel zueinander verlaufende zweite Seitenwände andererseits. Dabei sind die vom Gehäuse aufgenommenen Elektrodenplatten zu den ersten Seitenwänden des Gehäuses parallel verlaufend ausgerichtet. Die zweiten Seitenwände des Gehäuses verlaufen quer zu den Elektrodenplatten.

Zwischen zwei benachbarten Elektrodenplatten ist jeweils ein als Separator dienendes Vlies angeordnet. Des Weiteren nimmt das Gehäuse einen die Elektrodenplatten umgebenden Elektrolyten auf, wobei dieser im Falle von AGM-Batterien in gebundener Form vorliegt und von den zwischen den Elektrodenplatten befindlichen Vliesen bereitgestellt ist. Die Vliese dienen mithin nicht nur als Separatoren, sondern auch einer Elektrolytbindung.

Der bei AGM-Batterien in gebundener Form vorliegende Elektrolyt macht es in vorteilhafter Weise möglich, AGM-Batterien auch liegend, d. h. auf einer der Seitenwände des Gehäuses lagern zu können, ohne dass die Gefahr eines Elektrolytaustritts aus dem Gehäuse besteht.

Für eine langlebige Verwendbarkeit von AGM-Batterien ist es erforderlich, dass stets ein Flächenkontakt zwischen den einzelnen Elektrodenplatten und den dazwischen angeordneten und mit Elektrolyt bestückten Vliesen gegeben ist. Um dies sicherzustellen, werden Plattenpakete, bestehend aus den Elektrodenplatten und den dazwischen angeordneten Vliesen, in zusammengepresstem Zustand in das Gehäuse der AGM-Batterie eingesetzt. Im bestimmungsgemäßen Verwendungsfall kann es jedoch aufgrund des sich im Gehäuse ausbildenden Innendrucks zu einem Ausbeulen bzw. Ausbauchung des Gehäuses kommen, was dann trotz zuvor zusammengepresster Plattenpakete dazu führt, dass die zusammengepresste Anordnung der Elektrodenplatten und Vliese nicht weiter aufrechterhalten werden kann. Dies mit dem negativen Effekt, dass der Kontakt zwischen den Elektrodenplatten und den Vliesen nachlässt, wodurch sich eine deutliche Verminderung der Lebenszeit der AGM-Batterie ergibt. Dabei kann der Druck innerhalb eines Gehäuses einer AGM-Batterie insbesondere während eines Ladezykluses steigen, womit es wiederholt zu einer die Lebenszeit reduzierenden Kontaktminderung zwischen Elektrodenplatten und Vliesen kommt. Der Belastungszustand durch die zusammengepressten Vliese ist mithin die Hauptursache für das Ausbauchen der Gehäuse.

Um diesem Problem zu begegnen, ist es bereits vorgeschlagen worden, AGM-Batterien in Regalen liegend zu lagern, wobei die AGM-Batterien in Relation zum Regal derart ausgerichtet sind, dass die Elektrodenplatten parallel zu den Regalböden verlaufend ausgerichtet sind. Dabei sind die AGM-Batterien im bestimmungsgemäßen Verwendungsfall zwischen zwei Regalböden quasi eingeklemmt, wie dies auch mit der schon eingangs genannten DE 20 2019 105 570 U1 vorgeschlagen wird, um einem ungewollten Ausbeulen von Batteriegehäusen entgegenzuwirken.

Vergleichbare Systeme sind ferner aus der US 6,641,951 B1 und der EP 0 922 308 B1 bekannt. Auch hier kommen zur Aufnahme von AGM-Batterien Stapelhilfen zum Einsatz, die davon aufgenommene AGM-Batterien einhausen, wobei Tragelemente in Form von Zwischen- und/oder Einlegeböden vorgesehen sind, die kraftübertragend mit seitlich angeordneten Wangen verbunden sind. Im bestimmungsgemäßen Verwendungsfall sind die AGM-Batterien mithin zumindest zwischen einem Bodenelement und einem Zwischen-und/oder Einlegeboden einerseits und einem Zwischen- und/oder Einlegeboden und einem Deckelelement andererseits eingespannt, womit das Bodenelement, das Deckelelement und der zumindest eine Zwischen- und/oder Einlegeboden einem ungewollten Ausbeulen des Gehäuses einer AGM-Batterie entgegenwirken. Dabei erfolgt im Falle einer Kraftbeaufschlagung des Bodenelements, des Zwischen- und/oder Einlegebodens und/oder des Deckelelements in Folge eines Entgegenwirkens auf eine Gehäuseausbeulung einer AGM-Batterie eine Kraftableitung über die seitlichen Wangen der Stapelhilfe, die kraftübertragend mit dem zumindest einen Zwischen- und/oder Einlegeboden in Wirkverbindung stehen.

Aus der US 20020192543 A1 ist hingegen ein Batteriesystem mit einem vertikal aufrechtstehenden Stützrahmen bekannt, wobei der Stützrahmen die Aufnahme von Bleisäurezellen ermöglicht. Der Stützrahmen stellt hierzu mehrere nutenartige Aussparungen bereit. Die nutenartigen Aussparungen ermöglichen die Aufnahme von Einlegeböden und Zellenhalteelementen. Die Bleisäurezellen werden auf den Einlegeböden und/oder den Zellenhalteelementen angeordnet. Das von den Bleisäurezellen eingebrachte Eigengewicht wird von dem Stützrahmen aufgenommen.

Eine weitere Stapelhilfe ist aus der US 6,162,559 A bekannt. Diese vorbekannte Stapelhilfe verfügt über ein Gehäuse, welches einzelne Batteriezellen in Höhenrichtung übereinandergestapelt aufnimmt. Dabei verfügt das Gehäuse über eine Basis, eine obere Wand sowie über Seitenwände. Für eine Druckbeaufschlagung der einzelnen Batteriezellen ist ein Kompressionselement in Ausgestaltung einer Kompressionsplatte vorgesehen. Diese Kompressionsplatte liegt auf den zu Oberst angeordneten Batteriezellen auf und sorgt für eine Druckbeaufschlagung des gesamten Batteriezellen-Stapels. Zur Kraftbeaufschlagung der Kompressionsplatte sind Kompressionsmittel in Form von Schrauben vorgesehen, die sich an der oberen Gehäusewand abstützen, womit eine Kraftableitung über die mit der oberen Gehäusewand in Wirkverbindung stehenden Seitenwände erfolgt.

Die schon vorgenannte EP 0 922 308 B1 schlägt darüber hinaus einen modularen Aufbau der Stapelhilfe vor, wobei einzelne Module vorgesehen sind, die der jeweiligen Aufnahme von AGM-Batterien dienen. Dabei sind die einzelnen Module kraftübertragend miteinander gekoppelt, wobei zudem auf benachbarte Module einwirkende Druckelemente vorgesehen sind.

Ein ebenfalls modularer Aufbau einer Stapelhilfe ist aus der EP 3 396 733 A1 bekannt. Auch gemäß dieser Konstruktion kommen Druckelemente zum Einsatz, die zwischen in Höhenrichtung übereinander angeordneten Modulen positioniert sind. Dabei ist es der besondere Vorteil der mit der EP 3 396 733 A1 vorgeschlagenen Konstruktion, dass es aufgrund der Modularität ermöglicht ist, eine an die Anforderungen des jeweiligen Einzelfalls auszurichtende Anpassungen vorzunehmen. Eine weitere Ausgestaltung einer Stapelhilfe ist aus der EP 4 156 368 A1 bekannt. Diese vorbekannte Stapelhilfe sieht allerdings im Unterschied zu der aus der EP 3 396 733 A1 vorbekannten Stapelhilfe keine Module, sondern eine unmittelbare Positionierung von Batterien über- und/oder nebeneinander vor.

Obgleich sich die vorbekannten Systeme und Stapelhilfen im alltäglichen Praxiseinsatz bewährt haben, besteht Verbesserungsbedarf. So haftet den modularen Systemen der immanente Nachteil an, dass eine Vielzahl von unterschiedlichen Baukomponenten und Einzelteilen vorgesehen sind, was sowohl die Herstellung verteuert als auch eine Handhabung insbesondere bei einer Montage erschwert. Darüber hinaus weisen alle vorbekannten Systeme und Stapelhilfe den Nachteil auf, dass sie mittels eines entsprechenden Materialeinsatzes sehr robust ausgebildet sind, insbesondere um zu gewährleisten, dass eine entsprechende Kraftableitung über die seitlichen Wangen erfolgen kann. Der insoweit konstruktionsbedingte hohe Materialeinsatz macht die vorbekannten Stapelhilfen vergleichsweise teuer in der Herstellung. Zudem sind durch die materialintensive Ausgestaltung der Stapelhilfen sowohl die Fertigung als auch die Montage am Aufstellungsort erschwert.

Es ist die der Erfindung zugrundeliegenden **Aufgabe,** ein System beziehungsweise eine Stapelhilfe der eingangs genannten Art bereitzustellen, die konstruktionsbedingt bei gleichzeitig verbesserter Betriebswirtschaftlichkeit eine vereinfachte Handhabung insbesondere bei einer Montage ermöglichen.

Zur **Lösung** dieser Aufgabe wird mit der Erfindung unter anderem vorgeschlagen ein System, bestehend aus einer Stapelhilfe und einer Mehrzahl von in der Stapelhilfe angeordneten AGM-Batterien, wobei eine AGM-Batterie ein Gehäuse mit ersten Seitenwänden und im Gehäuse angeordnete Elektrodenplatten aufweist, wobei die ersten Seitenwände und die Elektrodenplatten parallel verlaufend ausgerichtet sind, wobei die Stapelhilfe einen U-förmig ausgebildeten Grundkörper aufweist, der über ausschließlich ein Tragelement zur Aufnahme der AGM-Batterien und über zwei orthogonal zum Tragelement ausgerichtete Wangen verfügt, wobei die Wangen einendseitig sowie anderendseitig des Tragelements am Tragelement angeordnet sind, wobei das Tragelement eine Mehrzahl von in Reihen übereinander angeordneten AGM-Batterien aufnimmt, wobei sowohl das Tragelement als auch die ersten Seitenwände der Gehäuse der AGM-Batterien horizontal verlaufend ausgerichtet sind, wobei die Wangen dazu eingerichtet sind, ausschließlich als seitlicher Schutz für die vom Tragelement aufgenommenen AGM-Batterien zu dienen, wobei zwischen zwei in Höhenrichtung aufeinander nachfolgenden Reihen von AGM-Batterien eine Positionierhilfe angeordnet ist, wobei die Positionierhilfe eine mit einem als Anschlag dienenden Fortsatz ausgerüstete Platte ist, dadurch gekennzeichnet, dass die Platte der Positionierhilfe aus Kunststoff gebildet ist.

Des Weiteren wird zur **Lösung** der vorstehenden Aufgabe vorgeschlagen eine Stapelhilfe für AGM-Batterien, mit Positionierhilfen, welche dazu ausgebildet sind, jeweils zwischen zwei in Höhenrichtung aufeinander nachfolgenden Reihen von AGM-Batterien angeordnet zu werden, und mit einem U-förmig ausgebildeten Grundkörper, der über ausschließlich ein Tragelement zur Aufnahme der AGM-Batterien und über zwei orthogonal zum Tragelement ausgerichtete Wangen verfügt, wobei die Wangen einendseitig sowie anderendseitig des Tragelements am Tragelement angeordnet sind, wobei das Tragelement dazu ausgebildet ist, eine Mehrzahl von in Reihen übereinander angeordneten AGM-Batterien aufzunehmen, wobei die Wangen dazu eingerichtet sind, ausschließlich als seitlicher Schutz für die vom Tragelement aufgenommenen AGM-Batterien zu dienen, wobei eine Positionierhilfe eine mit einem als Anschlag dienenden Fortsatz ausgerüstete Platte ist, dadurch gekennzeichnet, dass die Platte der Positionierhilfe aus Kunststoff gebildet ist.

Die Besonderheit sowohl des Systems als auch der Stapelhilfe ist in dem einfachen und wenig material- und bauteilintensiven Aufbau zu sehen. Dies vereinfacht sowohl die Fertigung als auch die Montage und vergünstigt zudem die Herstellung. Im Ergebnis wird so bei einer gleichzeitig verbesserten Betriebswirtschaftlichkeit eine vereinfachte Handhabung ermöglicht.

Die Stapelhilfe nimmt im bestimmungsgemäßen Verwendungsfall eine Mehrzahl von AGM-Batterien auf, die in Reihen übereinander angeordnet sind. Dabei sind die AGM-Batterien allein durch ein Tragelement abgestützt, das in Höhenrichtung zuunterst angeordnet ist, das also die in Reihen übereinander angeordneten AGM-Batterien aufnimmt. Im Unterschied zum Stand der Technik sind mithin keine Zwischen- oder Einlegeböden, Kompressionselemente und/oder dergleichen vorgesehen, die sich kraftübertragend an den Wangen abstützen. Es ist vielmehr ausschließlich nur ein Tragelement vorgesehen, das der Aufnahme der AGM-Batterien dient. Die Stapelhilfe ist mithin frei von weiteren an den Wangen angeordneten und AGM-Batterien aufnehmenden Tragelementen ausgebildet. Seitlich des Tragelements sind im bestimmungsgemäßen Zustand vertikal ausgerichtete Wangen vorgesehen, die am Tragelement angeordnet sind und die einerseits dazu dienen, dass für die aufeinander aufgestapelten AGM-Batterien ein Herausfallschutz geschaffen ist und die andererseits sicherstellen, dass die im bestimmungsgemäßen Verwendungsfall aufgestapelten AGM-Batterien vor einem ungewollten mechanischen Einfluss von außen geschützt sind. Im Unterschied zum Stand der Technik sind keine weiteren Tragelemente beispielsweise in Form von Zwischen- oder Einlegeböden vorgesehen, die der Aufnahme von AGM-Batterien dienen und kraftübertragend an den Wangen angeordnet sind. Insofern übernehmen die Wangen der Stapelhilfe keine tragende Funktion, sondern dienen im vorerläuterten Sinne nur als seitlicher Schutz für die von der Stapelhilfe aufgenommenen AGM-Batterien.

Diese Ausgestaltung erbringt in synergetischer Weise im Besonderen zwei Vorteile. Zum einen ist es ermöglicht, die seitlichen Wangen im Unterschied zum Stand der Technik weniger stabil und damit auch weniger materialintensiv ausführen zu können. Dies deshalb, weil die Wange nach der erfindungsgemäßen Ausgestaltung keinerlei Tragfunktion, sondern nur eine seitliche Schutzfunktion übernehmen. Dies führt im Ergebnis zu einer vereinfachten Montage und kostengünstigeren Herstellung. Zum anderen ist darüber hinaus von Vorteil, dass die Ausgestaltung insgesamt über einen nur denkbar einfachen Aufbau verfügt und schlussendlich über nur drei Baukomponenten verfügt, nämlich über zwei Wangen und ein dazwischen angeordnetes Tragelement. Damit ist eine gegenüber dem Stand der Technik deutlich verringerte Anzahl an Baukomponenten erreicht, was gleichfalls die Herstellungskosten senkt und eine Montage vereinfacht.

Die Ausgestaltung macht sich die Erkenntnis zu Nutze, dass die im bestimmungsgemäßen Verwendungsfall von der Stapelhilfe aufgenommenen AGM-Batterien aufgrund ihres Eigengewichts dafür Sorge tragen, dass ein ungewolltes Ausbeulen einzelner Batterie-Gehäuse sicher unterbunden ist. Systemseitig ist mit der Erfindung deshalb auch vorgesehen, dass sowohl das Tragelement als auch die ersten Seitenwände der Gehäuse der AGM-Batterien horizontal verlaufend ausgerichtet sind, wobei die ersten Seitenwände und die Elektrodenplatten parallel zueinander verlaufen. Im bestimmungsgemäßen Verwendungsfall sind mithin die AGM-Batterien in Ausbeulrichtung übereinander angeordnet, wobei eine mögliche Ausbeulung dadurch verhindert ist, dass sich die in Reihen übereinander aufgestapelten AGM-Batterien schwerkraftbedingt gegenübereinander abstützen. Dabei dient das die AGM-Batterien aufnehmende Tragelement als Widerlager, auf dem die AGM-Batterien aufliegen. Da keine Zwischen-und/oder Einlegeböden, d. h. keine weiteren Tragelemente vorgesehen sind, erfolgt auch keine Krafteinleitung in die seitlich ausgebildeten Wangen, auch nicht über Kompressionselemente, sodass diesen im Unterschied zum Stand der Technik keine tragende und/oder abstützende Funktion zukommt.

Insofern übernehmen die Wangen einzig und allein eine die aufgestapelten AGM-Batterien schützende Funktion, und zwar vor ungewollten mechanischen Einflüssen von außen einerseits und vor insbesondere im Erschütterungsfall aus der Stapelhilfe zur Seite unter Umständen ansonsten herausfallenden oder kippenden AGM-Batterien andererseits.

Es ist des Weiteren vorgesehen, dass zwischen zwei in Höhenrichtung aufeinander nachfolgenden Reihen von AGM-Batterien eine Positionierhilfe angeordnet ist.

Die erfindungsgemäß vorgesehene Positionierhilfe dient dazu, die AGM-Batterien in der Stapelhilfe bestimmungsgemäß auszurichten. Dabei findet mittels der Positionierhilfe sowohl eine Ausrichtung der AGM-Batterien relativ zueinander statt, als auch in Relation zur Stapelhilfe. Im Ergebnis sind die AGM-Batterien bestimmungsgemäß ausgerichtet und somit im Bedarfsfall verwenderseitig auch ohne Weiteres zugänglich, und zwar reihenweise in Relation zueinander als auch in ihrer Reihenanordnung in Relation zur Stapelhilfe.

Es ist bevorzugt, mit Ausnahme für die zu unterst von der Stapelhilfe aufgenommene Reihe an AGM-Batterien je AGM-Batterie-Reihe eine Positionierhilfe vorzusehen. Die unterste Reihe an AGM-Batterien liegt mithin auf dem Tragelement auf. Es folgen dann abwechselnd je eine Reihe an AGM-Batterien und eine Positionierhilfe. Im Ergebnis dieses Aufbaus sind sämtliche AGM-Batterien-Reihen zur Stapelhilfe ausgerichtet und die AGM-Batterien einer AGM-Batterien-Reihe in Relation zueinander ebenfalls.

Alternativ kann auch vorgesehen sein, auf das Tragelement zu unterst eine Positionierhilfe aufzulegen. In diesem Fall ist die zu unterst angeordnete AGM-Batterien-Reihe unter Zwischenordnung einer Positionierhilfe auf dem Tragelement abgelegt.

Die Positionierhilfe ist nicht kraftübertragend mit den Wangen der Stapelhilfe verbunden. Insofern dient die Positionierhilfe im Unterschied zum Stand der Technik nicht als Zwischenboden und/oder Kompressionselement. Ihr ausschließlicher Sinn und Zweck besteht darin, die von der Stapelhilfe aufgenommenen AGM-Batterien positionsgenau auszurichten. Dabei ist jede Positionierhilfe quasi schwimmend zwischen zwei AGM-Batterien-Reihen angeordnet, stützt sich mithin in Schwerkraftrichtung nicht gegenüber den Wangen ab.

Die Ausgestaltung der Positionierhilfe bringt mehrere Vorteile. Zum einen wird eine bestimmungsgemäße Ausrichtung der AGM-Batterien gewährleistet, was für die Zugänglichkeit der AGM-Batterien förderlich ist. Es können insbesondere standardisierte Kabellängen zur elektrischen Kontaktierung der einzelnen AGM-Batterien verwendet werden, da die Abstandshaltung zwischen den AGM-Batterien stets identisch ist, und zwar nicht nur innerhalb einer Stapelhilfe, sondern auch hinsichtlich baugleicher Stapelhilfen. Es können somit für unterschiedliche Stapelhilfen ein und dieselben Verbindungskabel genutzt werden. Dies ist hinsichtlich Lagerhaltung, Bevorratung und Montage bzw. Demontage von erheblichem Vorteil.

Durch die Beabstandung der AGM-Batterien mittels der Positionierhilfe wird zudem ein Spaltraum zwischen benachbarten AGM-Batterien geschaffen, der eine verbesserte Kühlung der einzelnen AGM-Batterien durch Luftumspülung ermöglicht. Die Lebensdauer eines erfindungsgemäßen Systems wird somit erhöht.

Des Weiteren ist von Vorteil, dass eine Erstbestückung einer Stapelhilfe mit AGM-Batterien in vereinfachter Weise möglich ist. Denn es ist für eine bestimmungsgemäße Bestückung der Stapelhilfe mit AGM-Batterien nicht erforderlich, jede einzelne AGM-Batterie manuell auszurichten. Nach einer bestimmungsgemäßen Bestückung der Stapelhilfe mit einer Positionierhilfe kann auf diese eine nächste Reihe von AGM-Batterien aufgestapelt werden, wobei diese Reihe an AGM-Batterien dank der Positionierhilfe ohne weiteres Hinzutun bestimmungsgemäß ausgerichtet, mithin positioniert ist, und zwar sowohl die einzelnen AGM-Batterien dieser Reihe untereinander, als auch die AGM-Batterien-Reihe in Relation zur Stapelhilfe.

Auf eine solch bestimmungsgemäß ausgerüstete AGM-Batterien-Reihe kann alsdann eine weitere Positionierhilfe aufgelegt werden, die dann der bestimmungsgemäßen Ausrichtung der AGM-Batterien der nachfolgenden AGM-Batterien-Reihe dient.

Da in schon vorbeschriebener Weise eine Kraftbeaufschlagung der Wangen in vertikaler Richtung konstruktionsbedingt ausbleibt, ist ein einfaches Übereinanderstapeln von AGM-Batterien-Reihen und Positionierhilfen abwechselnd in einfacher Weise möglich. Dies gestattet eine schnelle Erstmontage und Ausrüstung einer Stapelhilfe und gestattet es zudem, einen auch nachträglich einfachen Zugang zu einzelnen AGM-Batterien zu ermöglichen, beispielsweise aus Gründen der Wartung.

Es ist vorgesehen, dass die Positionierhilfe eine mit einem als Anschlag dienenden Fortsatz ausgerüstete Platte ist.

Die Positionierhilfe ist als Platte ausgebildet und liegt auf den Gehäusen der AGM-Batterien auf. Dabei sind die AGM-Batterien derart positioniert, dass sie frontseitig der Stapelhilfe deckelseitig zugänglich sind. Die AGM-Batterien sind mithin liegend von der Stapelhilfe aufgenommen, so dass ihre Anschlusspole frontseitig der Stapelhilfe verwenderseitig zugänglich sind. Die Platte der Positionierhilfe liegt mithin auf den ersten Seitenwänden der Gehäuse der zu einer Reihe gehörenden AGM-Batterien auf.

Dabei weist die Platte der Positionierhilfe einen als Anschlag dienenden Fortsatz auf. An diesem Anschlag liegen die AGM-Batterien einer Reihe mit ihrem Gehäuseboden im bestimmungsgemäßen Verwendungsfall an. Im Ergebnis sind so sämtliche auf einer Positionierhilfe angeordneten AGM-Batterien gleich ausgerichtet und im Übrigen davor geschützt, über den Anschlag hinaus insbesondere im Montagefall gedrückt zu werden. Der Anschlag sorgt mithin einerseits für eine sichere Positionierung auf der Positionierhilfe sowie andererseits für eine Gleichausrichtung sämtlicher zu einer Reihe gehörenden AGM-Batterien.

Gemäß der Erfindung ist vorgesehen, dass die Platte der Positionierhilfe aus Kunststoff gebildet ist. Auch diese Maßnahme ist insbesondere aus betriebswirtschaftlichen Gründen von Vorteil, da die Herstellung von Kunststoffplatten und deren spätere Verarbeitung in einfacher und kostengünstiger Weise möglich ist.

Gemäß einem weiteren Merkmal der Erfindung ist vorgesehen, dass der Fortsatz durch eine einstückig mit der Platte ausgebildete Randkante bereitgestellt ist.

Die den Anschlag bildende Randkante der Positionierhilfe ist vorzugsweise rückseitig der Stapelhilfe ausgebildet. Die AGM-Batterien können mithin frontseitig der Stapelhilfe in selbige eingefügt werden, bis die AGM-Batterien mit ihrem Gehäuseboden an der rückwärtigen Randkante der jeweils zugehörigen Positionierhilfe anliegen. Sie sind damit in schon vorbeschriebener Weise gleich ausgerichtet und vor einem zu weiten Durchschieben und einem ungewollten rückwärtigen Herausfallen aus der Stapelhilfe sicher geschützt.

Gemäß einem weiteren Merkmal der Erfindung ist vorgesehen, dass die Positionierhilfe mit von den Wangen bereitgestellten Fortsätzen zusammenwirkt. Hierdurch ist eine Ausrichtung der Positionierhilfe in Relation zur Stapelhilfe gewährleistet, was die ordnungsgemäße Ausrichtung einer AGM-Batterien-Reihe in Relation zur Stapelhilfe gewährleistet.

Die stapelseitigen Fortsätze sind von den Wangen der Stapelhilfe bereitgestellt, wobei je Wange ein Fortsatz vorgesehen ist. Ein solcher Fortsatz kann beispielsweise durch einen in Längsrichtung einer Wange verlaufenden Steg ausgebildet sein, der bei einer bestimmungsgemäß aufgestellten Stapelhilfe vertikal verläuft. Die Positionierhilfe ist bis auf Anschlag an diese von den Wangen bereitgestellten Fortsätze in die Stapelhilfe einzuführen. Im Ergebnis liegt die Positionierhilfe positionsgenau und -richtig in Relation zur Stapelhilfe. Bei einer Bestückung einer Positionierhilfe mit AGM-Batterien in der schon vorbeschriebenen Weise ergibt sich mithin eine Ausrichtung der AGM-Batterien je Reihe in Relation zur Positionierhilfe, wobei die Positionierhilfe selbst in Relation zur Stapelhilfe ausgerichtet ist, so dass im Ergebnis die AGM-Batterien sowohl in Relation zueinander als auch in Relation zur Stapelhilfe bestimmungsgemäß ausgerichtet sind.

Gemäß einem weiteren Merkmal der Erfindung ist vorgesehen, dass die Positionierhilfe zur Beabstandung benachbarter AGM-Batterien Abstandshalter aufweist. Die Abstandshalter dienen dazu, eine Beabstandung zwischen zwei benachbarten AGM-Batterien einer AGM-Batterien-Reihe zu bewirken. Im Ergebnis sind so benachbarte AGM-Batterien unter Ausbildung eines Zwischenspalts benachbart zueinander angeordnet. Dieser Zwischenspalt dient insbesondere der Luftumspülung der AGM-Batterien zwecks verbesserter Kühlung derselben.

Gemäß einem weiteren Merkmal der Erfindung ist vorgesehen, dass ein Abstandshalter durch einen Holzdübel gebildet ist. Diese Ausgestaltung erweist sich insbesondere aus betriebswirtschaftlichen Gründen als besonders vorteilhaft. Zudem ist eine vereinfachte Montage der als Holzdübel ausgebildeten Abstandshalter ermöglicht. Zudem sind Holzdübel korrosionsbeständig und elektrisch isolierend.

Gemäß einem weiteren Merkmal der Erfindung ist vorgesehen, dass die Platte der Positionierhilfe zwischen zwei benachbarten AGM-Batterien über eine Bohrung verfügt, in die ein als Abstandshalter dienender Holzdübel eingesetzt ist. Die Platte der Positionierhilfe ist mithin mit Bohrungen ausgerüstet, in die im Weiteren Holzdübel als Abstandshalter einzusetzen sind. Dabei ist die Platte der Positionierhilfe nach Art eines Rasters mit Bohrungen ausgerüstet, so dass nach einem späteren Einbringen der Holzdübel in die jeweils zugehörigen Bohrungen Kompartments zwischen zwei in Längsrichtung der Positionierhilfe benachbarten Holzdübeln entstehen, in welche je nach Ausgestaltung entweder eine AGM-Batterie oder zwei AGM-Batterien Platz finden. Bei der Anordnung zweier AGM-Batterien je Kompartment sind die in einem Kompartment untergebrachten AGM-Batterien spaltlos einander nebengeordnet. Die jeweils benachbarten AGM-Batterien benachbarter Kompartments liegen dann unter Zwischenordnung der Abstandshalter an der jeweiligen AGM-Batterie des Kompartments an, so dass jede AGM-Batterie eine luftumspülte Seite aufweist.

Bei einer Kompartmentausbildung, dergemäß je Kompartment nur eine AGM-Batterie vorgesehen ist, ergibt sich eine beidseitige Luftumspülung einer jeden AGM-Batterie.

Gemäß einem weiteren Merkmal der Erfindung ist vorgesehen, dass das Tragelement auf seiner wangenabgewandten Unterseite mit streifenförmig ausgebildeten und als Standfüße dienenden Isolatoren aus Kunststoff ausgerüstet ist. Das Tragelement bzw. die davon aufgenommenen AGM-Batterien stützen sich mithin schlussendlich unter Zwischenordnung der Isolatoren auf dem Untergrund am Aufstellungsort der Stapelhilfe ab. Dabei sind die Isolatoren aus einem nicht elektrisch leitenden Material gebildet, nämlich Kunststoff.

Die Isolatoren dienen dabei nicht nur der elektrischen Isolation der Stapelhilfe gegenüber dem Untergrund am Aufstellungsort, sie dienen zugleich auch als Standfüße. Eine sichere Aufstellung der Stapelhilfe am Aufstellungsort ist so in vorteilhafter Weise gewährleistet. Dabei bestehen die Isolatoren vorzugsweise aus einem weichelastischen Kunststoffmaterial, so dass ein Niveauausgleich bei einem etwaigen nicht ebenen Untergrund am Aufstellungsort gewährleistet ist.

Aus der Möbelindustrie ist es bekannt, plättchenförmig ausgebildete Füße zu verwenden, die am abzustützenden Möbelstück auch höhenverstellbar angeordnet sein können. Eine solche Höhenverstellung ist insbesondere dann vonnöten, wenn der Untergrund am Aufstellungsort nicht hinreichend nivelliert ausgebildet ist.

Von Nachteil derlei vorbekannter Füße ist indes, dass sie aufgrund der Möglichkeit der Verstellbarkeit nicht größerflächig ausgebildet sind und so eine nur sehr punktuelle Krafteinleitung ermöglichen. Im Unterschied hierzu sind die Isolatoren nach der Erfindung streifenförmig und damit größerflächig ausgebildet, womit eine mehr flächenhafte Kraftableitung erreicht ist. Dies ermöglicht es in vorteilhafter Weise, das Tragelement weniger stabil auszubilden, was wiederum die Herstellung der erfindungsgemäßen Stapelhilfe vergünstigt und auch die Montage vor Ort erleichtert. Zudem kann aufgrund der streifenförmigen Ausgestaltung der Isolatoren die Anzahl der insgesamt einzusetzenden Isolatoren auf ein Minimum reduziert werden. Denn bei nur punktförmig kraftableitenden Isolatoren ist zur Vergrößerung der insgesamt gegebenen Standfläche eine Vielzahl einzelner Isolatoren erforderlich, was dank der erfindungsgemäßen Ausgestaltung ob der Streifenförmigkeit vermieden ist. Auch hierdurch wird eine Montage bzw. Demontage vereinfacht.

Der mit der streifenförmigen Ausgestaltung der Isolatoren einhergehende Nachteil der mangelnden Höhenverstellbarkeit wird bewusst in Kauf genommen, da die vorbeschriebenen Vorteile hinsichtlich Herstellung und Montage überwiegen. Zudem hat sich in der Praxis herausgestellt, dass eine separate Höhenverstellung einzelner Isolatoren nur in wenigen Ausnahmefällen tatsächlich erforderlich ist. Sofern also im Einzelfall eine Ausnevillierung der Stapelhilfe erforderlich sein sollte, so kann diese manuell durch den Einsatz zusätzlicher Unterlegelemente erreicht werden. Bei diesen Unterlegelementen kann es sich beispielsweise um einzelne Streifenelemente aus Kunststoff handeln.

Im Ergebnis erbringt die erfindungsgemäße Ausgestaltung der streifenförmigen Isolatoren eine vereinfachte Handhabung. Es kann herstellerseitig eine Vormontage erfolgen, so dass am Aufstellungsort selbst keine weitere Montage erforderlich ist. Aufgrund ihrer Elastizität vermögen die erfindungsgemäßen Isolatoren einen gewissen Niveauausgleich zu ermöglichen. Dieser ist aber oftmals gar nicht erforderlich, so dass die Vorteile der vereinfachten und vergünstigten Herstellung und der vereinfachten Handhabung vor Ort am Aufstellungsort überwiegen.

Gemäß einem weiteren Merkmal der Erfindung ist vorgesehen, dass sich ein Isolator über die gesamte Breite des Tragelements erstreckt. Ein Isolator schließt mithin in Breitenrichtung des Tragelements bündig mit dem Tragelement ab. Dies gewährleistet einen sicheren Stand der Stapelhilfe und hilft, ungewollte Kippbewegungen in Breitenrichtung der Stapelhilfe zu vermeiden, auch im Falle einer ungewollten mechanischen Kraftbeaufschlagung der Stapelhilfe.

Gemäß einem weiteren Merkmal der Erfindung ist vorgesehen, dass das Tragelement zwei im Querschnitt rechteckförmige Rohre aufweist, die parallel verlaufend ausgerichtet in Rohrquerrichtung, d. h. in einer Richtung quer zur Rohrlängsrichtung voneinander beabstandet angeordnet sind. Diese beiden rechteckförmigen Rohre dienen quasi als Tragbalken, auf denen im bestimmungsgemäßen Verwendungsfall aufgestapelte AGM-Batterien ruhen. Der Einsatz derartiger Tragbalken ist im Unterschied zu flächenhaft ausgebildeten Tragelementen Ressourcen schonender, insbesondere weniger materialintensiv. Dabei erweisen sich Rechteckrohre zudem besonders vorteilhaft bei der Aufnahme von im bestimmungsgemäßen Belastungsfall auftretenden Biege- und Torsionsbeanspruchungen. Aufgrund der rechteckförmigen Ausgestaltung ist zudem sichergestellt, dass eine in einfacher Weise vorzunehmende Stapelung der über ein im Querschnitt ebenfalls rechteckförmig ausgebildetes Gehäuse verfügenden AGM-Batterien gewährleistet ist. Die beiden Rohre können in ihrer jeweiligen Querschnittsfläche unterschiedlich groß ausgebildet sein.

Gemäß einem weiteren Merkmal der Erfindung ist vorgesehen, dass zwischen den beiden Rohren ein Abstandshalter angeordnet ist. Dieser Abstandshalter sorgt im bestimmungsgemäßen Verwendungsfall der Stapelhilfe für eine dauerhaft sichere Beabstandung der beiden Rohre, womit eine sichere Aufnahme der AGM-Batterien durch das Tragelement gewährleistet ist. Durch den Abstandshalter ist zudem ein definierter Abstand zwischen den beiden Rohren sichergestellt, was insbesondere mit Blick auf die Montage einer Verlängerung der Stapelhilfe von Vorteil ist, wie dies im Weiteren noch näher beschrieben werden wird. Ein zwischen den beiden Rohren ausgebildeter Abstandshalter dient zudem dazu, eine Wange am Tragelement anzuordnen. Dem Abstandshalter kommt mithin eine Doppelfunktion zu. Zum einen sorgt er für die definierte Abstandswahrung zwischen den beiden Rohren des Tragelements und zum anderen dient er als Ankerelement bzw. Widerlager zur Anordnung einer Wange am Tragelement.

Die erfindungsgemäß vorgesehenen Isolatoren sind auf der wangenabgewandten Unterseite des Trageelements angeordnet und bevorzugterweise mit beiden Rohren des Tragelements gekoppelt. Dabei kann die Verbindung eines Isolators mit den beiden Rohren eine Steck-, Schraub- und/oder Klebverbindung sein.

Ein Tragelement ist bevorzugter Weise mit einer Mehrzahl von Isolatoren ausgerüstet. Es sind wenigstens zwei Isolatoren vorgesehen, die beabstandet voneinander angeordnet sind, beispielsweise einendseitig sowie anderendseitig des Tragelements. Je nach Erstreckung des Tragelements in Längsrichtung können auch mehr als nur zwei Isolatoren vorgesehen sein. Bevorzugt ist es indes, die Isolatoren hinsichtlich ihrer jeweiligen Beabstandung voneinander äquidistant auszurichten.

Gemäß einem weiteren Merkmal der Erfindung ist vorgesehen, dass die Rohre stirnseitig offen ausgebildet sind. Ein jedes Rohr des Tragelements verfügt mithin stirnseitig über Eingangsöffnungen, das heißt einendseitig über eine erste Eingangsöffnung und anderendseitig über eine zweite Eingangsöffnung. Diese Eingangsöffnungen dienen dazu, wie dies im Weiteren noch näher beschrieben werden wird, Verbindungsmittel aufzunehmen, mittels denen die Stapelhilfe im Bedarfsfall in Längsrichtung verlängert werden kann, wobei eine verlängerte Stapelhilfe im Unterschied zu einer unverlängerten Stapelhilfe ein Mehr an AGM-Batterien aufnehmen kann.

Gemäß einem weiteren Merkmal der Erfindung ist vorgesehen, dass das Tragelement aus zwei lösbar miteinander verbundenen Tragelementabschnitten gebildet ist. Ein Tragelement ist mithin zweiteilig ausgebildet und verfügt über einen ersten Tragelementabschnitt einerseits und einen zweiten Trageelementabschnitt andererseits. Diese beiden Tragelementabschnitte sind in Längsrichtung des Tragelements hintereinander angeordnet und lösbar miteinander verbunden.

Diese Ausgestaltung des Tragelements erbringt im Wesentlichen zwei Vorteile. Zum einen ist eine Transport- und Montagevereinfachung gegeben. Denn das zweiteilig ausgebildete Tragelement kann in seine beiden Abschnitte demontiert einfacher zum Aufstellungsort transportiert und dort bestimmungsgemäß aufgebaut werden. Dabei ist die Montage der beiden Tragelementabschnitte denkbar einfach, da diese unter Zuhilfenahme von selbstklemmenden Verbindungsmitteln lediglich durch Stecken zu montieren sind. Da es aufgrund der erfindungsgemäßen Ausgestaltung nur zu einer Druckbelastung des Tragelements kommt, die Wangen hingegen keine Tragfunktion, sondern nur eine Schutzfunktion übernehmen, wirkt auf die die beiden Tragelementabschnitte lösbar miteinander verbindende Steckverbindung keine Kraft in Längsrichtung der Steckverbindung ein. Insofern bedarf es keiner zusätzlichen Absicherung der Steckverbindung.

Von Vorteil der zweiteiligen Ausgestaltung des Tragelements ist ferner, dass die Stapelhilfe in Längsrichtung größenvariabel ist. So können insbesondere auch mehr als nur zwei Tragelementabschnitte miteinander kombiniert werden. In diesem Zusammenhang ist ferner von Vorteil, dass eine Stapelhilfe in einfacher Weise in Längsrichtung verlängert werden kann. Die Rohre eines Tragelements einer bestehenden Stapelhilfe sind stirnseitig zugänglich und verfügen in vorbeschriebener Weise über Eingangsöffnungen. Diese Eingangsöffnungen dienen in der schon vorbeschriebenen Weise dazu, als Steckmittel ausgebildete Verbindungsmittel aufnehmen zu können. Es ist so insgesamt die Möglichkeit gegeben, eine bestehende Stapelhilfe durch stirnseitiges Anfügen weiterer Tragelementabschnitte zu verlängern. Es ist so in einfacher Weise die Möglichkeit geschaffen, die von einem erfindungsgemäßen System bereitgestellte Batterie-Kapazität im Bedarfsfall ausbauen zu können.

Gemäß einem weiteren Merkmal der Erfindung ist in diesem Zusammenhang vorgesehen, dass sich der U-förmig ausgebildete Grundkörper aus zwei L-förmig ausgebildeten Basiskörpern zusammensetzt, wobei ein Basiskörper einen Tragelementabschnitt und eine hiervon einendseitig angeordnete Wange aufweist. Gemäß dieser bevorzugten Ausführungsform wird mit der Erfindung ein Baukastenprinzip vorgeschlagen. Dabei meint "Baukastenprinzip" im Sinne der Erfindung, dass verwenderseitig Basiskörper bereitgestellt sind, die je nach individuellem Bedarf an Batteriekapazität zur Ausbildung einer entsprechend groß ausgebildeten Stapelhilfe lösbar miteinander verbunden sind. In der einfachsten Ausführungsform sind zwei solcher Basiskörper vorgesehen. In diesem Fall werden die Basiskörper jeweils mit ihren wangenentfernten Enden einander zugewandt und über Verbindungsmittel lösbar miteinander gekoppelt. Es entsteht so in schon vorbeschriebener Weise ein U-förmig ausgebildeter Grundkörper, der ein Tragelement aus zwei Tragelementabschnitten aufweist sowie über zwei Wangen verfügt, wobei pro Tragelementabschnitt eine Wange vorgesehen ist.

An einen solch ausgebildeten U-förmigen Grundkörper können nun nach Bedarf sowohl linksseitig als auch rechtsseitig weiterer Basiskörper angeordnet und mit dem U-förmig ausgebildeten Grundkörper lösbar verbunden werden. Die Stapelhilfe kann so nach Bedarf um die Größe eines halben Grundkörpers vergrößert werden. Sofern also ein Bestandsgrundkörper sowohl linksseitig als auch rechtsseitig jeweils um ein Basiselement erweitert wird, kann die so ausgebildete vergrößerte Stapelhilfe die doppelte Menge an AGM-Batterien im Unterschied zu einer einfachen Stapelhilfe aufnehmen.

Gemäß einem weiteren Merkmal der Erfindung ist vorgesehen, dass die Rohre über stirnseitige Öffnungen zugängliche Kanäle zur Aufnahme von Verbindungsmitteln aufweisen. Wie schon vorstehend beschrieben, ist eine lösbare Verbindung nebengeordneter Basiskörper möglich. Zu diesem Zweck kommen vorzugsweise als Steckmittel ausgebildete Verbindungsmittel zum Einsatz. Zur Anordnung dieser Verbindungsmittel am jeweiligen Tragelement bzw. Tragelementabschnitt sind die das Tragelement bzw. die den Tragelementabschnitt bildenden Rohre mit Kanälen ausgerüstet, in denen Verbindungsmittel im endmontierten Zustand entsprechend zu liegen kommen. Dabei sind diese Kanäle über stirnseitige Öffnungen der Rohre zugänglich.

Gemäß einem weiteren Merkmal der Erfindung ist vorgesehen, dass zwei Tragelementabschnitte mittels zweier Verbindungsmittel lösbar miteinander verbunden sind, wobei die Verbindungsmittel im Querschnitt jeweils U-förmig und zu den stirnseitigen Öffnungen der Rohre korrespondierend ausgebildet sind. Die im Querschnitt U-förmige Ausgestaltung der Verbindungsmittel ermöglicht eine einfache Montage bzw. Demontage, und dies in vorteilhafter Weise werkzeuglos. Dabei sind die Verbindungsmittel im Vergleich zu den von den Rohren der Tragelemente bzw. Tragelementabschnitte bereitgestellten Kanälen auf Übermaß ausgebildet. Durch leichtes Zusammendrücken im Montagefall können die Verbindungsmittel in ihrer äußeren geometrischen Form verkleinert und so in die zugehörigen Kanäle der Rohre eingeschoben werden. Dort spreizen sich die Verbindungsmittel wieder auf und legen sich so unter Federvorspannung kraft- und formschlüssig an die Innenwand der Rohre an. Es ist so eine einfach zu montierende bzw. zu demontierende Verbindung gegeben, die gleichwohl aber eine sichere Verbindung gewährleistet und damit auch eine sichere Aufnahme von AGM-Batterien ermöglicht. Dabei ist in diesem Zusammenhang von Bedeutung, dass die Wangen keine Kraftquerbeaufschlagung abfangen müssen, das heißt keine Kraftkomponente quer zur Vertikalen aufnehmen müssen, so dass auch eine Kraftbeaufschlagung der die Rohre miteinander koppelnden Steckverbindungen quer zur Vertikalen unterbleibt. Auch insofern ist eine dauerhaft sichere Verbindungsausgestaltung gewährleistet.

Weitere Merkmale und Vorteile der Erfindung ergeben sich aus der nachfolgenden Beschreibung anhand der Figuren. Dabei zeigen
- Fig. 1: in schematisch perspektivischer Darstellung eine erfindungsgemäße Stapelhilfe;
- Fig. 2: in schematisch perspektivischer Darstellung den Basiskörper einer erfindungsgemäßen Stapelhilfe;
- Fig. 3: in schematischer Perspektivansicht von oben einen erfindungsgemäßen Trageelementabschnitt;
- Fig. 4: in schematisch perspektivischer Ansicht von unten den Tragelementabschnitt nach Fig. 3 ohne Isolatoren;
- Fig. 5: in schematisch perspektivischer Darstellung ein erfindungsgemäßer Isolator;
- Fig. 6: in schematisch perspektivischer Ansicht von unten einen erfindungsgemäßen Tragelementabschnitt mit daran angeordneten Isolatoren;
- Fig. 7: in schematisch perspektivischer Darstellung erfindungsgemäße Verbindungselemente in Form von Steckelementen;
- Fig. 8: in schematischer Darstellung eine erfindungsgemäße Positionierhilfe gemäß einer ersten Ausführungsform;
- Fig. 9: in schematisch perspektivischer Ansicht eine erfindungsgemäße Positionierhilfe gemäß einer zweiten Ausführungsform;
- Fig. 10: in schematisch perspektivischer Darstellung eine erfindungsgemäße Stapelhilfe gemäß einer alternativen Ausführungsform;
- Fig. 11: in einer Detailansicht die Stapelhilfe nach Fig. 10 und
- Fig. 12: in schematisch perspektivischer Darstellung die Stapelhilfe nach Fig. 10 mit davon aufgenommenen AGM-Batterien.

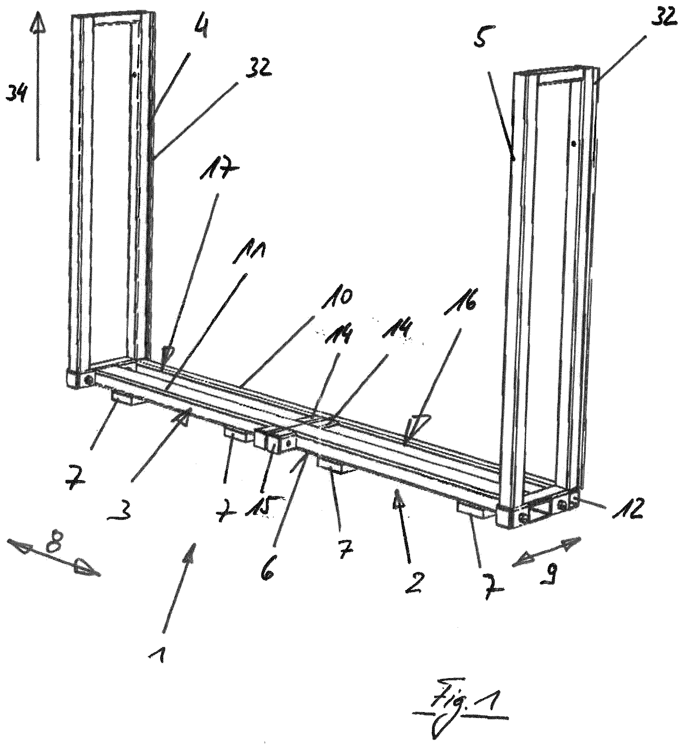

Fig. 1 lässt in schematisch perspektivischer Darstellung eine erfindungsgemäße Stapelhilfe 1 erkennen, die im bestimmungsgemäßen Verwendungsfall der Aufnahme einer Mehrzahl von AGM-Batterien dient, die in den Figuren der besseren Übersicht wegen im Einzelnen nicht dargestellt sind.

Die Stapelhilfe 1 verfügt über einen U-förmig ausgebildeten Grundkörper 2. Dieser weist seinerseits ein Tragelement 3 und zwei Wangen 4 und 5 auf, wobei die Wangen 4 und 5 einendseitig sowie anderendseitig des Tragelements 3 am Tragelement 3 angeordnet sind.

Im bestimmungsgemäßen Verwendungsfall nimmt das Tragelement 3 eine Mehrzahl von in Reihen übereinander angeordneten AGM-Batterien auf. Dabei sind sowohl das Tragelement 3 als auch die ersten Seitenwände der Gehäuse der AGM-Batterien horizontal verlaufend ausgerichtet, so dass die von den Gehäusen der AGM-Batterien jeweils aufgenommenen und zu den ersten Seitenwänden der Gehäuse jeweils parallel verlaufend ausgerichteten Elektrodenplatten der AGM-Batterien ebenfalls parallel zum Tragelement 3 und damit horizontal verlaufend ausgerichtet sind.

Die Wangen 4 und 5 sind dazu eingerichtet, ausschließlich als seitlicher Schutz für vom Tragelement 3 aufgenommene AGM-Batterien zu dienen. Insofern übernehmen die Wangen 4 und 5 der Stapelhilfe 1 keine tragende Funktion, sondern dienen nur als seitlicher Schutz für die von der Stapelhilfe 1 aufgenommenen AGM-Batterien, insbesondere als Schutz vor einem ungewollten mechanischen Einfluss von außen.

Das Tragelement 3 weist im Querschnitt rechteckförmige Rohre 10 und 11 auf. Diese sind parallel zueinander ausgerichtet und in einer Richtung quer zur Rohrlängsrichtung beabstandet voneinander angeordnet. Zur Abstandswahrung ist zwischen den beiden Rohren 10 und 11 ein Abstandshalter 14 angeordnet, wobei im gezeigten Ausführungsbeispiel mehrere Abstandshalter 14 vorgesehen sind.

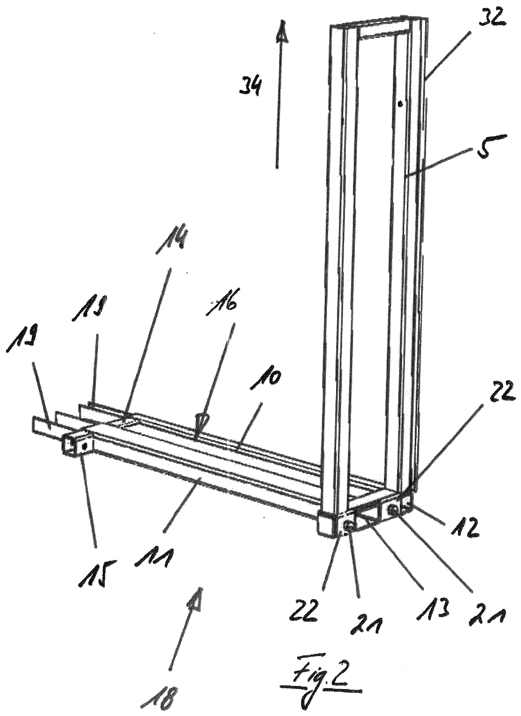

Das Tragelement 3 verfügt über zwei lösbar miteinander verbundene Tragelementabschnitte 16 und 17. Diese sind identisch zueinander ausgebildet und in Längsrichtung 8 des Tragelements 3 hintereinander angeordnet. Dabei ist die Verbindung zwischen den beiden Tragelementabschnitten 16 und 17 lösbar ausgebildet, und zwar durch eine Steckverbindung, wie dies im Weiteren noch anhand von Fig. 2 beschrieben werden wird.

Die Stapelhilfe 1 verfügt des Weiteren über Isolatoren 7. Diese sind streifenförmig ausgebildet und dienen als Standfüße. Sie sind am Tragelement 3 angeordnet, und zwar an dessen wangenabgewandter Unterseite 6. Sie sind aus Kunststoff gebildet, vorzugsweise aus einem weichelastischen Kunststoffmaterial.

Es sind bevorzugterweise eine Mehrzahl von Isolatoren 7 vorgesehen, die in Längsrichtung 8 des Tragelements 3 unter jeweiliger Belassung eines Abstandes hintereinander angeordnet sind. Im gezeigten Ausführungsbeispiel sind je Tragelementabschnitt 16 bzw.17 zwei Isolatoren 7 vorgesehen, womit das Tragelement 3 insgesamt über vier Isolatoren 7 verfügt.

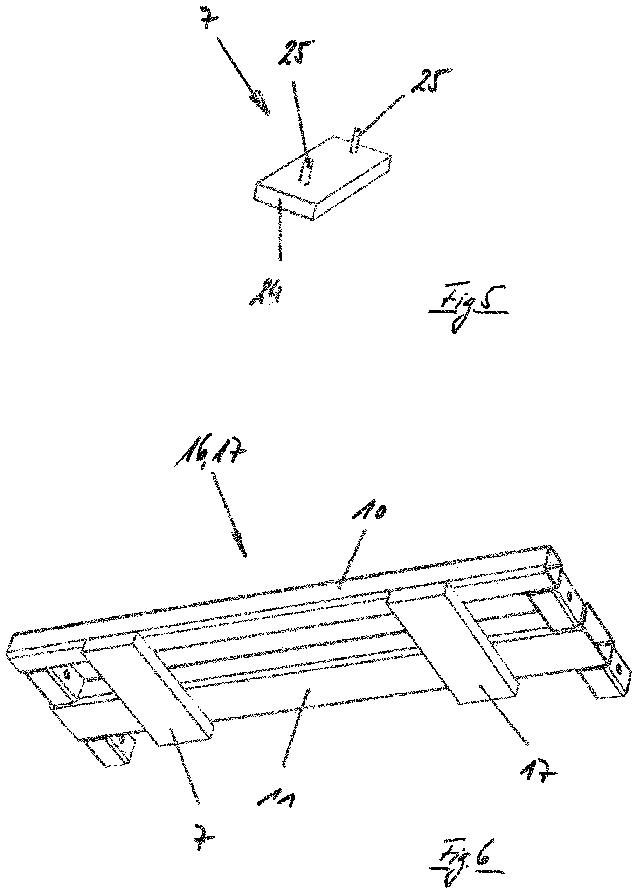

Die Isolatoren 7 erstrecken sich über die gesamte Breite des Tragelements 3 in Breitenrichtung 9. Damit schließen die Isolatoren 7 mit den jeweils zugehörigen Rohren 10 und 11 mit Bezug auf die Zeichnungsebene nach Fig. 1 sowohl vorderseitig als auch rückseitig bündig ab. Dieser Sachzusammenhang ergibt sich insbesondere auch aus der Darstellung nach Fig. 6.

Der in Fig. 1 dargestellte Grundkörper 2 ist aus zwei L-förmig ausgebildeten Basiskörpern 18 zusammengesetzt. Ein solcher Basiskörper 18 ist in Fig. 2 dargestellt.

Wie sich aus der Darstellung nach Fig. 2 ergibt, weist ein Basiskörper 18 einen Trageelementabschnitt 16 bzw. 17 auf sowie eine hieran einendseitig angeordnete Wange 4 bzw. 5. Der U-förmig ausgebildete Grundkörper 2 ist mithin zweiteilig ausgebildet und besteht aus zwei Basiskörpern 18, die im endmontierten Zustand des U-förmig ausgebildeten Grundkörpers 2 lösbar miteinander gekoppelt sind, wie sich dies auch einer Zusammenschau der Fign. 1 und 2 ergibt.

Die Rohre 10 und 11 der Tragelementabschnitte 16 und 17 bzw. des aus den Tragelementabschnitten 16 und 17 gebildeten Tragelements 3 sind stirnseitig offen ausgebildet und stellen jeweils Öffnungen 12 bzw. 13 bereit. Über diese Öffnungen 12 bzw. 13 sind die von den jeweiligen Rohren 10 und 11 jeweils bereitgestellten Kanäle zugänglich. In diese Kanäle ist zwecks lösbarer Verbindung zweier Basiskörper 18 jeweils ein Verbindungsmittel 19 eingeführt, wie sich dies insbesondere aus der Darstellung nach Fig. 2 ergibt. Wie Fig. 2 in diesem Zusammenhang erkennen lässt, sind zwei Verbindungsmittel 19 vorgesehen, die jeweils zur Hälfte vom jeweils zugehörigen Rohr 10 bzw. 11 des Basiskörpers 18 aufgenommen sind. Im endmontierten Zustand greifen die Verbindungsmittel 19 mit ihren nach Fig. 2 noch freien Enden in die Kanäle des benachbarten Basiskörpers 18 ein, das heißt in den mit Bezug auf die Zeichnungsebene nach Fig. 1 linken Basiskörper 18.

Im gezeigten Ausführungsbeispiel sind die Verbindungsmittel 19 im Querschnitt U-förmig ausgebildet. Sie sind zwecks bestimmungsgemäßer Montage an ihren Schenkeln zu ergreifen und zusammenzudrücken und zwar federelastisch. Sie sind mit Bezug auf die von den Rohren 10 und 11 bereitgestellten Kanäle auf Übermaß ausgebildet, so dass sie in leicht zusammengedrücktem Zustand in die jeweiligen Kanäle der Rohre 11 und 12 eingeführt werden können. Sobald sie entspannen und in ihre Ausgangsposition zurückfedern folgt ein federkraftbelastetes Anliegen der Verbindungsmittel 19 an der Innenwand der zugehörigen Rohre 10 bzw. 11. Es ist so eine form- und kraftschlüssige Verbindung gegeben, die die beiden Basiskörper 18 dauerhaft und sicher, gleichwohl aber lösbar miteinander verbindet.

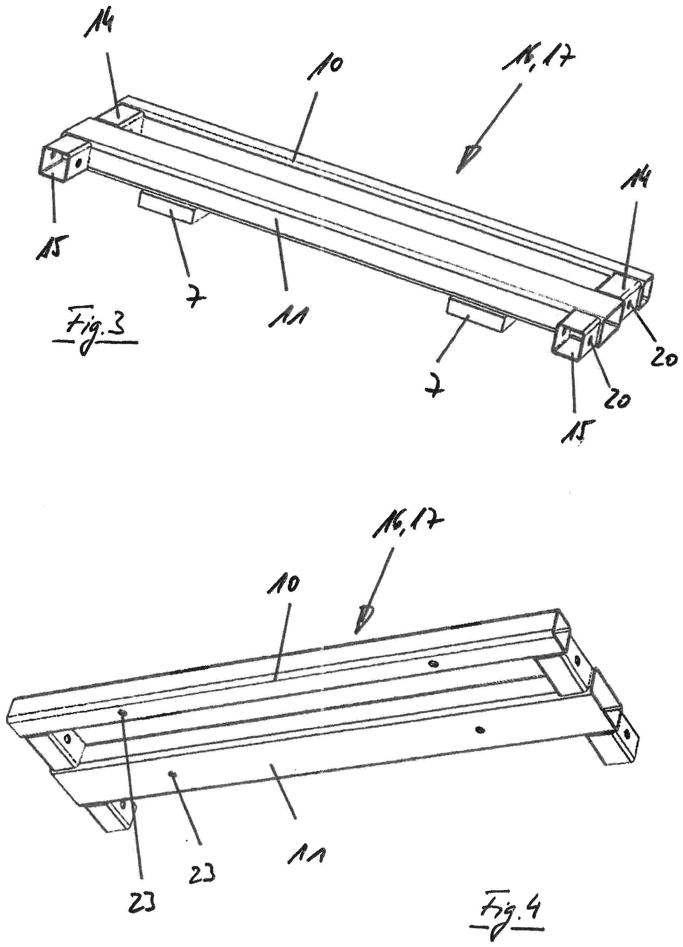

Fig. 3 zeigt in einer schematischen Perspektivansicht ein Tragelementabschnitt 16 bzw. 17. Wie sich aus dieser Darstellung ergibt, sind zwischen den beiden Rohren 10 und 11 einendseitig sowie anderendseitig Abstandshalter 14 angeordnet. Diese sorgen für eine definierte und dauerhaft sichere Beabstandung der beiden Rohre 10 und 11.

Jedem Abstandshalter 14 ist zudem ein Fortsatz 15 zugeordnet, der anderendseitig des mit Bezug auf die Zeichnungsebene nach Fig. 1 vorderen Rohres 11 am vorderen Rohr 11 angeordnet ist. Sowohl die Abstandshalter 14 als auch die Fortsätze 15 verfügen über Bohrungen 20, die im endmontierten Zustand der Aufnahme von Befestigungsmitteln dienen, bei denen es sich insbesondere um Schrauben 21 handelt, wie aus Fig. 2 ersichtlich.

Die Abstandshalter 20 sowie die Fortsätze 15 dienen als Ankerpunkte bzw. Widerlager zur lösbaren Anordnung der Wangen 4 bzw. 5 am jeweils zugehörigen Tragelementabschnitt 16 bzw. 17, wie sich dies insbesondere aus einer Zusammenschau der Fign. 1 und 2 ergibt. Dabei verfügt eine jede Wange 4 bzw. 5 tragelementseitig über zu den Abstandshaltern 14 bzw. den Fortsätzen 15 korrespondierend ausgebildete Schuhe 22. Diese sind gleichfalls mit entsprechenden Bohrungen ausgestattet, so dass im endmontierten Zustand die schuhseitigen Bohrungen einerseits sowie die Bohrungen 20 der Abstandshalter 14 bzw. der Fortsätze 15 von den Schrauben 21 durchgriffen sind. Es ist so eine einfach auszubildende, gleichwohl aber dauerhaft sichere und stabile Anordnung der Wangen 4 und 5 am Tragelement 3 gewährleistet.

Wie die Darstellung nach Fig. 4 erkennen lässt, verfügt ein Tragelementabschnitt 16 bzw. 17 auf seiner wangenabgewandten Unterseite 7 über Bohrungen 23. Diese dienen der positionssicheren Anordnung der schon vorbeschriebenen Isolatoren 7.

Fig. 5 lässt einen separat dargestellten Isolator 7 erkennen. Dieser verfügt über einen Leistenkörper 24, der aus einem Kunststoffmaterial gebildet ist. Der Leistenkörper 24 ist mit Stiften 25 ausgerüstet, die im endmontierten Zustand in zugehörige Bohrungen 23 der Tragmittelabschnitte 16 bzw. 17 eingreifen. Die Stifte 25 können als Gewindestifte ausgebildet sein und/oder einer Verklebung mit einem Tragelementabschnitt 16 bzw. 17 dienen.

Einen endfertig mit Isolatoren 7 bestimmungsgemäß ausgerüsteten Tragelementabschnitt 16 bzw. 17 zeigt Fig. 6 in einer schematisch perspektivischen Ansicht von unten.

Wie wiederum eine Zusammenschau insbesondere nach den Fign. 1 und 2 erkennen lässt, ist die erfindungsgemäße Stapelhilfe 1 nach dem Baukastenprinzip aufgebaut bzw. erweiterbar. So lassen sich zwei identisch ausgebildete Basiskörper 18 gemäß Fig. 2 zu einer Stapelhilfe 1 nach Fig. 1 ausbilden, indem die beiden Basiskörper 18 unter Verwendung der Verbindungsmittel 19 lösbar zu einem U-förmig ausgebildeten Grundkörper 2 miteinander kombiniert werden.

Die so ausgebildete Stapelhilfe 1 gemäß Fig. 1 kann im Bedarfsfall erweitert werden, und zwar in Längsrichtung 8, indem weitere Basiskörper 18 mit Bezug auf die Zeichnungsebene nach Fig. 1 entweder linksseitig und/oder rechtsseitig ergänzt werden. Um dies zu ermöglichen, sind die Rohre 10 und 11 des Tragelements 3 stirnseitig jeweils offen ausgebildet, was in schon vorbeschriebener Weise die Aufnahme von Verbindungsmittel 19 ermöglicht. Ein Basiskörper nach Fig. 2 kann mithin ohne weiteres mit Bezug auf die Zeichnungsebene nach Fig. 1 links- und/oder rechtsseitig der Stapelhilfe 1 angeflanscht werden. Die in Fig. 1 dargestellte Stapelhilfe 1 ist mithin nach Belieben erweiterbar und kann so im Bedarfsfall die gewünschte Anzahl von AGM-Batterien aufnehmen und somit die gewünschte Batteriekapazität zur Verfügung stellen. Auch ein an eine Stapelhilfe 1 zwecks Erweiterung derselben angeflanschter Basiskörper 18 kann seinerseits wiederum um einen weiteren Basiskörper 18 verlängert werden, indem in gleicher Weise eine lösbare Steckverbindung der schon vorbeschriebenen Art ausgebildet wird.

Die gesamte Konstruktion bietet insgesamt den Vorteil, dass das ausschließlich nur eine vorgesehene Tragelement 3 bzw. die das Tragelement 3 bildenden Tragelementabschnitte 16 und 17 die von der Stapelhilfe 1 im bestimmungsgemäßen Verwendungsfall aufgenommenen AGM-Batterien kraftübertragend abstützen. Die Wangen 4 und 5 übernehmen keine tragende Funktion und dienen lediglich dem seitlichen Schutz der von der Stapelhilfe 1 aufgenommenen AGM-Batterien. Über die wangenunterseitig am Tragelement 3 angeordneten Isolatoren 7 ist die Stapelhilfe gegenüber dem Untergrund auf Aufstellungsort elektrisch isoliert. Dabei dienen die Isolatoren 7 zudem als Standfüße, womit ein dauerhaft sicherer Stand der Stapelhilfe 1 auf dem Untergrund am Aufstellungsort gewährleistet ist.

Die Isolatoren 7 sind streifenförmig ausgebildet, so dass sie keine punkthafte, sondern vielmehr flächenhafte Kraftübertragung in den Untergrund am Aufstellungsort ermöglichen, was die Standsicherheit vergrößert.

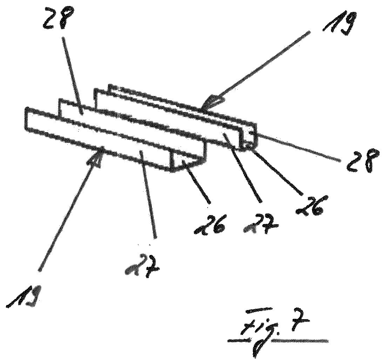

Fig. 7 zeigt in schematisch perspektivischer Darstellung zwei Verbindungmittel 19 in Form von Steckmitteln. Diese sind jeweils U-förmig ausgebildet und verfügen über eine Basis 26 sowie zwei daran angeordnete Schenkel 27 und 28. Dabei sind die Schenkel 27 und 28 basisentfernt mit einer freien Randkante ausgerüstet, was es ermöglicht, die Schenkel 27 und 28 insbesondere durch manuelle Kraftbeaufschlagung federelastisch gegeneinander zu drücken. In solch einem zusammengedrückten Zustand können die Verbindungsmittel 19 in die jeweils zugehörigen Kanäle der Rohre von Trägerelementabschnitten eingeführt werden. Sobald dies geschehen ist und die Kraftbeaufschlagung aufgehoben wird, schwenken die Schenkel 27 und 28 in ihre in Fig. 7 gezeigte Ausgangslage zurück, wobei sie sich infolgedessen kraft- und formschlüssig an die Innenseite der jeweiligen Rohrkanäle anlegen.

Wie sich aus der Darstellung nach Fig. 7 ergibt, sind die Verbindungmittel 19 hinsichtlich ihrer Basis 26 unterschiedlich groß ausgebildet, womit sie korrespondierend zur Größe der jeweiligen Rohre 10 und 11 ausgestaltet sind. Durch die unterschiedliche Größenausgestaltung ist eine Codierung gegeben, so dass eine falsche Zuordnung von Verbindungsmitteln 19 zu Rohren 10 bzw. 11 sicher ausgeschlossen ist.

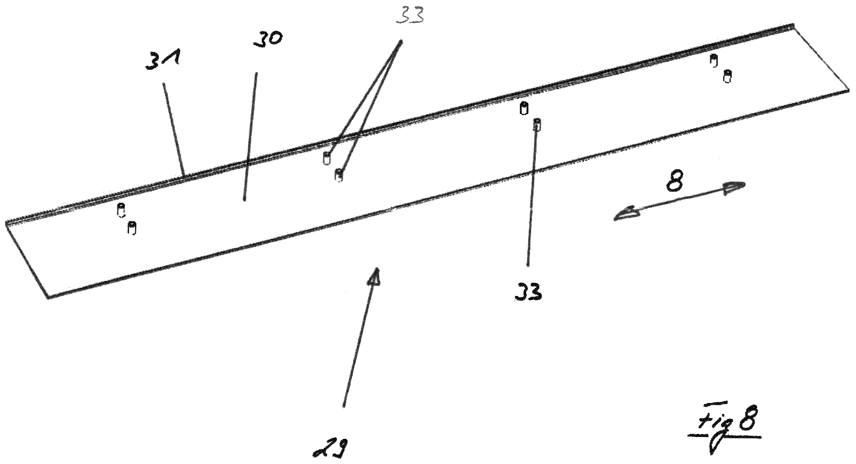

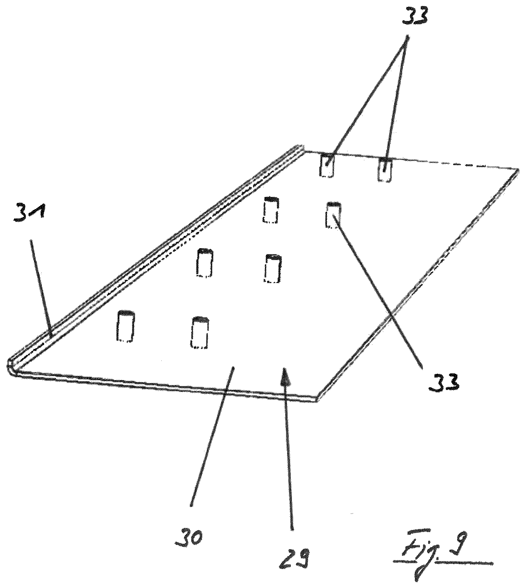

Die Fign. 8 und 9 lassen jeweils in perspektivischer Ansicht eine erfindungsgemäße Positionierhilfe 29 erkennen. Dabei sind die Positionierhilfen 29 nach den Fign. 8 und 9 in Längsrichtung 8 unterschiedlich groß ausgebildet. Die in Fig. 8 dargestellte Positionierhilfe 29 ist in ihrer Größenausgestaltung an ein Tragelement 3 angepasst, das aus zwei Tragelementabschnitten 16 und 17 zusammengesetzt ist. Die Positionierhilfe 29 nach Fig. 9 ist hinsichtlich ihrer Längserstreckung in Längsrichtung 8 indes an die geometrische Ausgestaltung eines Trägerelementabschnitts 16 bzw. 17 angepasst. Die Positionierhilfe 29 nach Fig. 8 kommt mit einem U-förmig ausgebildeten Grundkörper nach Fig. 1 in Verwendung. Im Unterschied hierzu dient die Positionierhilfe 29 nach Fig. 9 im Verlängerungsfall der Stapelhilfe 1 der Verwendung zusammen mit einem L-förmig ausgebildeten Basiskörper 18 nach Fig. 2.

Die Positionierhilfe 29 verfügt über eine vorzugsweise aus Kunststoff gebildete Platte 30. Diese ist mit einer in Längsrichtung verlaufenden Randkante 31 ausgerüstet, die zur Ebene der Platte 30 abgewinkelt ausgebildet ist. Diese Randkante 31 dient der positionssicheren Anordnung der Positionierhilfe 29 innerhalb der Stapelhilfe 2.

Die Stapelhilfe 2 verfügt zu diesem Zweck über Fortsätze 32, wie aus Fig. 1 ersichtlich. Diese Fortsätze 32 sind wangenseitig ausgebildet und weisen die Form von in Längsrichtung der Wangen 4 und 5 jeweils verlaufenden Stege auf. Im bestimmungsgemäßen Verwendungsfall sind die Fortsätze 32 vertikal ausgerichtet, wie in Fig. 1 dargestellt. Bei einer bestimmungsgemäßen Unterbringung der Positionierhilfe 29 in der Stapelhilfe 1, liegt die Positionierhilfe 29 mit ihrer mit Bezug auf die Zeichnungsebene nach Fig. 1 hinteren Randkante 31 an den Fortsätzen 32 der Wangen 4 und 5 an. In dieser Position ist die Positionierhilfe 29 in Relation zur Stapelhilfe 2 positionsgenau zur Stapelhilfe 2 ausgerichtet.

Die Randkante 31 der Positionierhilfe 29 dient zudem der positionsgenauen Anordnung von AGM-Batterien auf der Positionierhilfe 29. Zu diesem Zweck werden AGM-Batterien liegend auf der Positionierhilfe 29 aufgelegt, und zwar derart, dass sie mit ihrem jeweiligen Gehäuseboden an der Randkante 31 anliegen. Die Positionierhilfe 29 dient mithin dazu, die von einer Positionierhilfe 29 jeweils aufgenommenen AGM-Batterien in Relation zueinander auszurichten, sowie die von einer Positionierhilfe 29 insgesamt aufgenommene Reihe an AGM-Batterien in Relation zur Stapelhilfe 2 auszurichten.

Für eine beabstandete Anordnung benachbarter AGM-Batterien verfügt die Positionierhilfe 29 über Abstandshalter 33. Diese sind als Holzdübel ausgebildet und in entsprechende Bohrungen der Platte 30 der Positionierhilfe 29 eingesetzt.

Zur Bestückung einer Stapelhilfe 2 mit AGM-Batterien kommt je AGM-Batterien-Reihe eine Positionierhilfe 29 zur Anwendung. Dabei werden AGM-Batterien-Reihen und Positionierhilfen 29 in Höhenrichtung 34 abwechselnd übereinander angeordnet. Damit ist jede AGM-Batterien-Reihe mittels ihrer zugehörigen Positionierhilfe 29 ordnungsgemäß ausgerichtet, und zwar sowohl die AGM-Batterien-Reihe dieser Positionierhilfe 29 in Relation zur Stapelhilfe 2 als auch die AGM-Batterien dieser Reihe in Relation zueinander.

Durch die Abstandshalter 33 der Positionierhilfe ist zudem sichergestellt, dass benachbarte AGM-Batterien unter Belassung eines Spalts einander nebengeordnet sind, womit eine Luftumspülung zwecks Kühlung der AGM-Batterien sichergestellt ist.

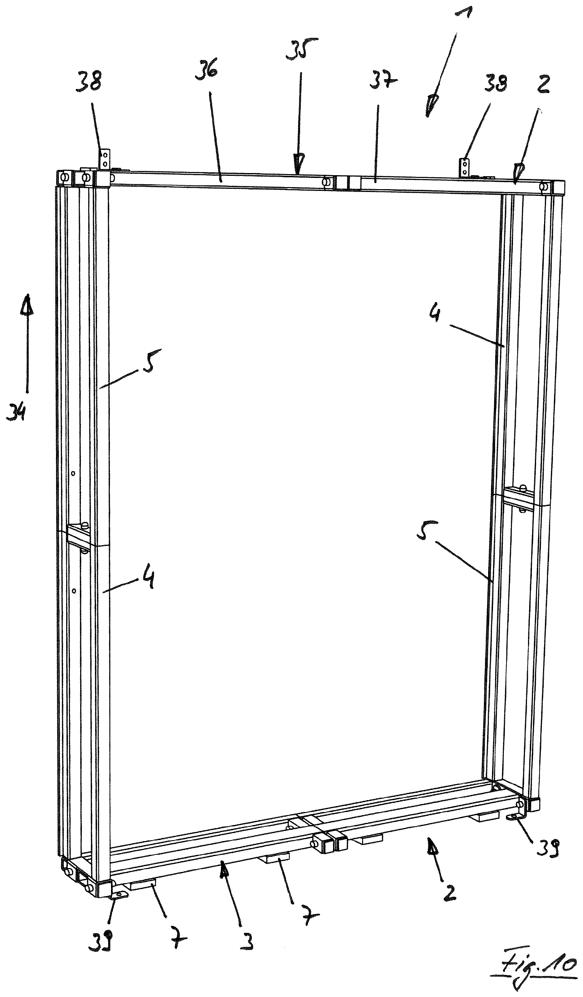

Fig. 10 lässt in einer schematisch perspektivischen Darstellung eine erfindungsgemäße Stapelhilfe 1 gemäß einer alternativen Ausführungsform erkennen.

Die Stapelhilfe 1 nach Fig. 10 ist aus zwei Grundkörpern 2 gebildet, die in Höhenrichtung 34 übereinander angeordnet sind. Dabei sind die offenen Seiten der U-förmigen Grundkörper 2 einander zugewandt, so dass sich eine insgesamt rechteckförmige geschlossene Ausgestaltung ergibt.

Gemäß der alternativen Ausführungsform nach Fig. 10 dient das Tragelement des in Höhenrichtung 34 zuoberst angeordneten Grundkörpers 2 als Dachelement 35. Da die beiden in Höhenrichtung 34 übereinander angeordneten Grundkörper 2 identisch ausgebildet sind, ist auch das als Dachelement 35 dienende Tragelement des oberen Grundkörpers 2 identisch zum Tragelement 3 des unteren Grundkörpers 2 ausgebildet und verfügt über zwei miteinander verbundene Dachelementabschnitte 36 und 37, die identisch zu den Tragelementabschnitten 16 und 17 ausgebildet sind.

Das Dachelement 35 dient im Unterschied zum Tragelement 3 aber nicht der Aufnahme von AGM-Batterien, sondern als Abschlusselement, so dass eine insgesamt geschlossene, mithin rechteckförmig ausgebildete Stapelhilfe 1 gegeben ist.

Das Dachelement 35 dient ferner dazu, im Bedarfsfall eine Wandbefestigung 38 aufnehmen zu können. Für eine solche Wandbefestigung 38 können beispielsweise Winkelelemente vorgesehen sein, die einerseits an der Stapelhilfe 1 und andererseits an einer Wand am Aufstellungsort, beispielsweise einer Gehäusewand angeordnet sind. Die Anbindung solcher Winkelelemente an einem in Höhenrichtung 34 zuoberst angeordneten Dachelement 35 erbringt insbesondere den Vorteil, einer möglichen Umkippbewegung der Stapelhilfe 1 wirkungsvoll entgegenzutreten. Im endmontierten Zustand sind deshalb entsprechende Winkelelemente als Wandbefestigung 38 zur Anbindung des Dachelements 35 an einer Gebäudewand vorgesehen.

Obgleich das Tragelement des in Höhenrichtung 34 zuoberst angeordneten Grundkörpers 2 als Dachelement 35 Verwendung findet und nicht dazu dient, AGM-Batterien aufzunehmen, ist die Verwendung eines zum unteren Tragelement 3 identisch ausgebildeten Dachelements 35 bevorzugt, und zwar aus Gründen der vereinfachten Handhabung, insbesondere hinsichtlich Lagerhaltung und Montage bzw. Demontage. Denn die Stapelhilfe 1 nach Fig. 10 wird in einfacher Weise dadurch ausgebildet, dass zwei Grundkörper 2 gemäß der Ausführungsform nach Fig. 1 in Höhenrichtung 34 übereinander angeordnet werden. Verwenderseitig kann mithin die Aufnahmekapazität einer Stapelhilfe 1 dadurch verdoppelt werden, dass zwei Grundkörper 2 in der Ausgestaltung nach Fig. 1 übereinander angeordnet werden. Für eine lagesichere Fixierung der in Höhenrichtung 34 übereinander angeordneten Grundkörper 2 kommen Steckmittel zum Einsatz, beispielsweise in Form von Rohren oder offenen, U-förmigen Profilen, die jeweils in die die Wangen 4 bzw. 5 bildenden Rohre eingeführt sind. Es kommt insofern eine Steckverbindung zum Einsatz, wie sie vorstehend bereits anhand der Tragelementabschnitte 16 und 17 erläutert ist.

Mit der erfindungsgemäßen Konstruktion der Stapelhilfe 1 wird ein flexibles System bereitgestellt, das verwenderseitig eine Vielzahl möglicher Aufstellungsvarianten gestattet. So kann im einfachsten Fall als Stapelhilfe 1 ein Grundkörper 2 zum Einsatz kommen, wie er in Fig. 1 dargestellt ist. Dieser Grundkörper 2 kann mit Bezug auf die Zeichnungsebene nach Fig. 1 links- und/oder rechtsseitig ergänzt werden, und zwar durch einen Basiskörper 18, wie er in Fig. 2 dargestellt ist. Ferner ist es gestattet, zwei Grundkörper 2 in Höhenrichtung 34 übereinander anzuordnen, welche Ausführungsalternative in Fig. 10 gezeigt ist. Dabei kann auch ein zuoberst angeordneter Grundkörper 2 links- und/oder rechtsseitig durch einen Basiskörper 18 ergänzt werden, vorausgesetzt natürlich, der in Höhenrichtung 34 untere Grundkörper 2 ist durch Basiskörper 18 entsprechend ergänzt. In diesem Fall kommen dann die Grundkörper 2 einerseits sowie die ergänzenden Basiskörper 18 andererseits in Höhenrichtung 34 übereinander zu liegen.

Die Verbindung sowohl der Tragelementabschnitte 16 und 17 als auch der Dachelementabschnitte 36 und 37 erfolgt mittels des schon vorstehend beschriebenen Stecksystems. In gleicher Weise werden übereinander angeordnete Grundkörper 2 bzw. Basiskörper 18 miteinander verbunden, so dass ein insgesamt einfacher und werkzeugloser Aufbau der Stapelhilfe 1 gewährleistet ist, unabhängig von der gewünschten Aufstellungsvariante.

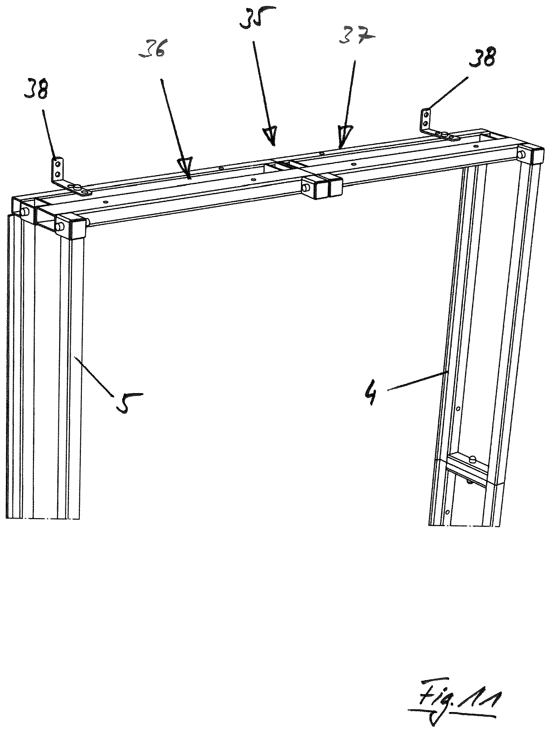

Fig. 11 lässt in einer Detailansicht die als Wandbefestigung 38 dienenden Winkelelemente erkennen, die im gezeigten Ausführungsbeispiel am Dachelement 35 angeordnet sind. Derlei Wandbefestigungen 38 können selbstverständlich auch an den Wangen 4 bzw. 5 sowohl des oberen als auch des unteren Grundkörpers 2 angeordnet sein.

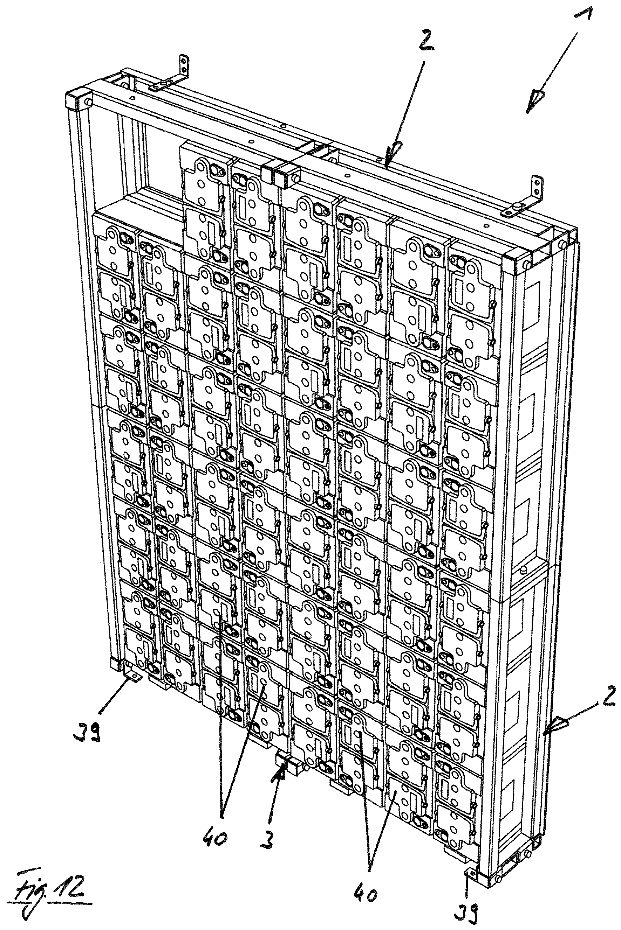

Fig. 12 zeigt schließlich noch eine mit AGM-Batterien 40 bestückte Stapelhilfe 1 nach Fig. 10. Wie dieser Darstellung zu entnehmen ist, sind die AGM-Batterien 40 jeweils so ausgerichtet, dass sie mit ihren ersten Seitenwänden horizontal ausgerichtet sind, so dass die von den AGM-Batterien 40 jeweils bereitgestellten Elektrodenplatten parallel zum Tragelement 3 des unteren Grundkörpers 2 ausgerichtet sind.

Wie eine Zusammenschau der Figuren 10 und 12 des Weiteren ergibt, können gemäß einem weiteren Vorschlag der Erfindung als weitere Option Bodenbefestigungen 39 vorgesehen sein. Auch diese Bodenbefestigungen 39 können Winkel-förmig ausgebildet sein, wobei es bevorzugt ist, diese an den Wangen 4 bzw. 5 des in Höhenrichtung 34 unteren Grundkörpers 2 der Stapelhilfe 1 einerseits und am Boden am Aufstellungsort andererseits anzuordnen. Eine solche Bodenbefestigung 39 dient insbesondere dazu, einen sicheren Stand der Stapelhilfe 1 auch für den Fall zu gewährleisten, dass von außen größere mechanische Kräfte auf die Stapelhilfe 1 einwirken, beispielsweise für den Fall eines Erdbebens oder eine Kollision eines Fahrzeuges mit der Stapelhilfe 1.

**Bezugszeichen**

| | | | |
|---|---|---|---|
| 1 | Stapelhilfe | 29 | Positionierhilfe |
| 2 | Grundkörper | 30 | Platte |
| 3 | Tragelement | 31 | Randkante |
| 4 | Wange | 32 | Fortsatz |
| 5 | Wange | 33 | Abstandshalter |
| 6 | Unterseite | 34 | Höhenrichtung |
| 7 | Isolator | 35 | Dachelement |
| 8 | Längsrichtung | 36 | Dachelementabschnitt |
| 9 | Breitenrichtung | 37 | Dachelementabschnitt |
| 10 | Rohr | 38 | Wandbefestigung |
| 11 | Rohr | 39 | Bodenbefestigung |
| 12 | Öffnung | 40 | AGM-Batterie |
| 13 | Öffnung | | |
| 14 | Abstandshalter | | |
| 15 | Fortsatz | | |
| 16 | Tragelementabschnitt | | |
| 17 | Tragelementabschnitt | | |
| 18 | Basiskörper | | |
| 19 | Verbindungsmittel | | |
| 20 | Bohrung | | |
| 21 | Schraube | | |
| 22 | Schuh | | |
| 23 | Bohrung | | |
| 24 | Leistenkörper | | |
| 25 | Stift | | |
| 26 | Basis | | |
| 27 | Schenkel | | |
| 28 | Schenkel | | |

## Patentansprüche

1. System bestehend aus einer Stapelhilfe (1) und einer Mehrzahl von in der Stapelhilfe (1) angeordneten AGM-Batterien, wobei eine AGM-Batterie ein Gehäuse mit ersten Seitenwänden und im Gehäuse angeordnete Elektrodenplatten aufweist, wobei die ersten Seitenwände und die Elektrodenplatten parallel verlaufend ausgerichtet sind, wobei die Stapelhilfe (1) einen U-förmig ausgebildeten Grundkörper (2) aufweist, der über ausschließlich ein Tragelement (3) zur Aufnahme der AGM-Batterien und über zwei orthogonal zum Tragelement (3) ausgerichtete Wangen (4, 5) verfügt, wobei die Wangen (4, 5) einendseitig sowie anderendseitig des Tragelements (3) am Tragelement (3) angeordnet sind, wobei das Tragelement (3) eine Mehrzahl von in Reihen übereinander angeordneten AGM-Batterien aufnimmt, wobei sowohl das Tragelement (3) als auch die ersten Seitenwände der Gehäuse der AGM-Batterien horizontal verlaufend ausgerichtet sind, wobei die Wangen (4, 5) dazu eingerichtet sind, ausschließlich als seitlicher Schutz für die vom Tragelement (3) aufgenommenen AGM-Batterien zu dienen, wobei zwischen zwei in Höhenrichtung (34) aufeinander nachfolgenden Reihen von AGM-Batterien eine Positionierhilfe (29) angeordnet ist, wobei die Positionierhilfe (29) eine mit einem als Anschlag dienenden Fortsatz ausgerüstete Platte (30) ist, **dadurch gekennzeichnet, dass** die Platte der Positionierhilfe (29) aus Kunststoff gebildet ist.

2. Stapelhilfe für AGM-Batterien, mit Positionierhilfen (29), welche dazu ausgebildet sind, jeweils zwischen zwei in Höhenrichtung (34) aufeinander nachfolgenden Reihen von AGM-Batterien angeordnet zu werden, und mit einem U-förmig ausgebildeten Grundkörper (2), der über ausschließlich ein Tragelement (3) zur Aufnahme der AGM-Batterien und über zwei orthogonal zum Tragelement (3) ausgerichtete Wangen (4, 5) verfügt, wobei die Wangen (4, 5) einendseitig sowie anderendseitig des Tragelements (3) am Tragelement (3) angeordnet sind, wobei das Tragelement (3) dazu ausgebildet ist, eine Mehrzahl von in Reihen übereinander angeordneten AGM-Batterien aufzunehmen, wobei die Wangen (4, 5) dazu eingerichtet sind, ausschließlich als seitlicher Schutz für die vom Tragelement (3) aufgenommenen AGM-Batterien zu dienen, wobei eine Positionierhilfe (29) eine mit einem als Anschlag dienenden Fortsatz ausgerüstete Platte (30) ist, **dadurch gekennzeichnet, dass** die Platte der Positionierhilfe (29) aus Kunststoff gebildet ist.

3. System oder Stapelhilfe nach Anspruch 1 oder 2, **dadurch gekennzeichnet, dass** der Fortsatz durch eine einstückig mit der Platte (30) ausgebildete Randkante (31) bereitgestellt ist.

4. System oder Stapelhilfe nach einem der vorhergehenden Ansprüche, **dadurch gekennzeichnet, dass** die Positionierhilfe (29) mit von den Wangen (4, 5) bereitgestellten Fortsätzen (32) zusammenwirkt.

5. System oder Stapelhilfe nach einem der vorhergehenden Ansprüche, **dadurch gekennzeichnet, dass** die Positionierhilfe (29) zur Beabstandung benachbarter AGM-Batterien Abstandshalter (33) aufweist.

6. System oder Stapelhilfe nach Anspruch 5, **dadurch gekennzeichnet, dass** ein Abstandshalter (33) durch einen Holzdübel gebildet ist.

7. System oder Stapelhilfe nach Anspruch 6, **dadurch gekennzeichnet, dass** die Platte (30) der Positionierhilfe (29) zwischen zwei benachbarten AGM-Batterien über eine Bohrung verfügt, in die ein als Abstandshalter (33) dienender Holzdübel eingesetzt ist.

8. System oder Stapelhilfe nach einem der vorhergehenden Ansprüche, **dadurch gekennzeichnet, dass** das Tragelement (3) auf seiner wangenabgewandten Unterseite mit streifenförmig ausgebildeten und als Standfüße dienenden Isolatoren (7) aus Kunststoff ausgerüstet ist, wobei eine Mehrzahl von Isolatoren vorgesehen sind, die in Längsrichtung (8) des Tragelements (3) unter jeweiliger Belassung eines Abstandes hintereinander angeordnet sind.

9. System oder Stapelhilfe nach einem der vorhergehenden Ansprüche, **dadurch gekennzeichnet, dass** das Tragelement (3) zwei lösbar miteinander verbundene Tragelementabschnitte (16, 17) aufweist.

10. System oder Stapelhilfe nach Anspruch 9, **dadurch gekennzeichnet, dass** sich der U-förmig ausgebildete Grundkörper (2) aus zwei L-förmig ausgebildeten Basiskörpern (18) zusammensetzt, wobei ein Basiskörper (18) einen Tragelementabschnitt (16, 17) und eine hieran einendseitig angeordnete Wange (4, 5) aufweist.

11. System oder Stapelhilfe nach einem der vorhergehenden Ansprüche 9 oder 10, **dadurch gekennzeichnet, dass** ein Tragelementabschnitt (16, 17) im Querschnitt rechteckförmige Rohre (10, 11) aufweist, die parallel ausgerichtet in einer Richtung quer zur Rohrlängsrichtung voneinander beabstandet sind.

12. System oder Stapelhilfe nach Anspruch 11, **dadurch gekennzeichnet, dass** die Rohre (10, 11) über stirnseitige Öffnungen (12, 13) zugängliche Kanäle zur Aufnahme von Verbindungsmitteln (19) aufweisen.

13. System oder Stapelhilfe nach Anspruch 12, **dadurch gekennzeichnet, dass** zwei Tragelementabschnitte (16, 17) mittels zweier Verbindungsmittel (19) lösbar miteinander verbunden sind, wobei die Verbindungsmittel (19) im Querschnitt jeweils U-förmig und zu den stirnseitigen Öffnungen (12, 13) der Rohre (10, 11) korrespondierend ausgebildet sind.

## Claims

1. System consisting of a stacking aid (1) and a plurality AGM batteries arranged in the stacking aid (1), wherein an AGM battery has a case with first sidewalls and electrode plates arranged in the case, wherein the first sidewalls and the electrode plates are arranged so that they extend parallel to each other, wherein the stacking aid (1) comprises a U-shaped base body (2) with only one supporting element (3) for accommodating the AGM batteries and two side pieces (4, 5) aligned orthogonally relative to the support element (3), wherein the side pieces (4, 5) are arranged on the supporting element (3) on one end and on the other end thereof, wherein the supporting element (3) accommodates a plurality AGM batteries arranged above one another in a row, wherein both the supporting element (3) and the first sidewalls of the case of the AGM batteries are aligned so that they extend horizontally, wherein the side panels (4, 5) are configured in such a way that they exclusively serve as a lateral protection for the AGM batteries accommodated by the supporting element (3), wherein a positioning aid (29) is arranged between two rows of AGM batteries succeeding each other in the height direction (34), wherein the positioning aid (29) is a plate (30) having an appendix which serves as a stop, **characterized in that** the plate of the positioning aid (29) is made of plastic.

2. Stacking aid for AGM batteries comprising positioning aids (29) which are each configured for being arranged between two rows of AGM batteries succeeding each other in the height direction (34), and comprising a U-shaped base body (2) with only one supporting element (3) for accommodating the AGM batteries and two side pieces (4, 5) aligned orthogonally relative to the support element (3), ), wherein the side pieces (4, 5) are arranged on the supporting element (3) on one end and on the other end thereof, wherein the side panels (4, 5) are configured in such a way that they exclusively serve as a lateral protection for the AGM batteries accommodated by the supporting element (3), wherein a positioning aid (29) is a plate (30) having an appendix which serves as a stop, **characterized in that** the plate of the positioning aid (29) is made of plastic.

3. System or stacking aid according to claim 1 or 2, **characterized in that** the appendix is provided by an edge (31) integrally formed with the plate (30).

4. System or stacking aid according to any of the preceding claims, **characterized in that** the positioning aid (29) interacts with appendices provided (32) by the side pieces (4, 5).

5. System or stacking aid according to any of the preceding claims, **characterized in that** the positioning aid (29) comprises spacers (33) for spacing adjacent AGM batteries.

6. System or stacking aid according to claim 5, **characterized in that** a spacer (33) is formed by a wooden dowel.

7. System or stacking aid according to claim 6, **characterized in that** the plate (30) of the positioning aid (29) between two adjacent AGM batteries has a bore having inserted therein a wooden dowel that serves as a spacer (33).

8. System or stacking aid according to any of the preceding claims, **characterized in that** the supporting element (3) is equipped on its bottom side facing away from the side pieces with strip-like plastic insulators (7) serving as supporting feet which are arranged one after the other in the longitudinal direction (8) of the supporting element (3) while leaving a respective distance.

9. System or stacking aid according to any of the preceding claims, **characterized in that** the supporting element (3) has to supporting element sections (16, 17) releasably connected to each other.

10. System or stacking aid according to claim 9, **characterized in that** the U-shaped base body (2) is composed of two L-shaped base bodies (18), wherein a base body (18) comprises a supporting element section (16, 17) and a side piece (4, 5) arranged adjacent to it at one end.

11. System or stacking aid according to any of claims 9 or 10, **characterized in that** a supporting element section (16, 17) comprises tubes (10, 11) with a rectangular cross section which are parallel to each other and are spaced from each other in direction transverse to the tube longitudinal direction.

12. System or stacking aid according to claim 11, **characterized in that** the tubes (10, 11) comprise channels for receiving connection means (19), which channels are accessible via front openings (12, 13).

13. System or stacking aid according to claim 12, **characterized in that** two supporting elements sections (16, 17) are releasably connected to each other by two connection means (19), wherein the connection means (19) are each U-shaped in cross section and are formed corresponding to the front openings (12, 13) of the tubes (10, 11).

## Revendications

1. Système comprenant um auxiliaire d'empilage (1) et une pluralité de batteries AGM disposées dans l'auxiliaire d'empilage (1), dans lequel une batterie AGM comporte un boîtier avec des premières parois latérales et des plaques d'électrodes disposées dans le boîtier, dans lequel les premières parois latérales et les plaques d'électrodes sont disposées de manière à s'étendre parallèlement les unes aux autres, dans lequel l'auxiliaire d'empilage (1) comprend un corps de base en forme de U (2) avec un seul élément de support (3) pour recevoir les batteries AGM et deux pièces latérales (4, 5) alignées orthogonalement par rapport à l'élément de support (3), dans lequel les pièces latérales (4, 5) sont disposées sur l'élément de support (3) à une extrémité et à l'autre extrémité de celui-ci, dans lequel l'élément de support (3) reçoit une pluralité de batteries AGM disposées les unes au-dessus des autres en une rangée, dans lequel l'élément de support (3) et les premières parois latérales du boîtier des batteries AGM sont alignés de manière à s'étendre horizontalement, les pièces latérales (4, 5) étant configurés de telle sorte qu'ils servent exclusivement de protection latérale pour les batteries AGM logées par l'élément de support (3), dans lequel un dispositif d'aide au positionnement (29) est disposé entre deux rangées de batteries AGM se succédant dans le sens de la hauteur (34), dans lequel l'aide au positionnement (29) est une plaque (30) comportant un appendice qui sert de butée, **caractérisé en ce que** la plaque de l'aide au positionnement (29) est en plastique.

2. Auxiliaire d'empilage pour batteries AGM comprenant des aides au positionnement (29) qui sont chacune configurées pour être disposées entre deux rangées de batteries AGM se succédant dans le sens de la hauteur (34), et comprenant un corps de base en forme de U (2) avec un seul élément de support (3) pour loger les batteries AGM et deux pièces latérales (4, 5) alignées orthogonalement par rapport à l'élément de support (3), les pièces latérales (4, 5) étant disposées sur l'élément de support (3) à une extrémité et à l'autre extrémité de celui-ci, les pièces latérales (4, 5) étant configurés de telle manière qu'ils servent exclusivement de protection latérale pour les batteries AGM logées par l'élément de support (3), dans lequel une aide au positionnement (29) est une plaque (30) comportant un appendice qui sert de butée, **caractérisé en ce que** la plaque de l'aide au positionnement (29) est en plastique.

3. Système ou auxiliaire d'empilage selon la revendication 1 ou 2, **caractérisé en ce que** l'appendice est constitué d'un bord (31) formé d'un seul tenant avec la plaque (30).

4. Système ou auxiliaire d'empilage selon l'une quelconque des revendications précédentes, **caractérisé en ce que** l'aide au positionnement (29) interagit avec des appendices prévus (32) sur les pièces latérales (4, 5).

5. Système ou auxiliaire d'empilage selon l'une quelconque des revendications précédentes, **caractérisé en ce que** l'aide au positionnement (29) comprend des entretoises (33) pour espacer les batteries AGM adjacentes.

6. Système ou auxiliaire d'empilage selon la revendication 5, **caractérisé en ce qu'**une entretoise (33) est formée par une cheville en bois.

7. Système ou auxiliaire d'empilage selon la revendication 6, **caractérisé en ce que** la plaque (30) de l'aide au positionnement (29) entre deux batteries AGM adjacentes comporte un alésage dans lequel est insérée une cheville en bois qui sert d'entretoise (33).

8. Système ou auxiliaire d'empilage selon l'une quelconque des revendications précédentes, **caractérisé en ce que** l'élément de support (3) est équipé, sur sa face inférieure opposée aux pièces latérales, d'isolateurs en plastique en forme de bandes (7) servant de pieds de support, qui sont disposés les uns après les autres dans le sens longitudinal (8) de l'élément de support (3) en laissant un espace respectif entre eux.

9. Système ou auxiliaire d'empilage selon l'une quelconque des revendications précédentes, **caractérisé en ce que** l'élément de support (3) comporte deux sections d'élément de support (16, 17) reliées entre elles de manière amovible.

10. Système ou auxiliaire d'empilage selon la revendication 9, **caractérisé en ce que** le corps de base en forme de U (2) est composé de deux corps de base en forme de L (18), dans lequel un corps de base (18) comprend une section d'élément de support (16, 17) et une pièce latérale (4, 5) disposée à côté de celle-ci à une extrémité.

11. Système ou auxiliaire d'empilage selon l'une quelconque des revendications 9 ou 10, **caractérisé en ce qu'**une section d'élément de support (16, 17) comprend des tubes (10, 11) de section transversale rectangulaire qui sont parallèles l'un à l'autre et espacés l'un de l'autre dans une direction transversale à la direction longitudinale des tubes.

12. Système ou auxiliaire d'empilage selon la revendication 11, **caractérisé en ce que** les tubes (10, 11) comprennent des canaux destinés à recevoir des moyens de connexion (19), lesquels canaux sont accessibles via des ouvertures frontales (12, 13).

13. Système ou auxiliaire d'empilage selon la revendication 12, **caractérisé en ce que** deux sections d'éléments de support (16, 17) sont reliées entre elles de manière amovible par deux moyens de connexion (19), les moyens de connexion (19) ayant chacun une section transversale en forme de U et étant formés de manière à correspondre aux ouvertures frontales (12, 13) des tubes (10, 11).
